# FASCICULE DE BREVET EUROPEEN

(11) **EP 1 855 229 B1**
(45) Date de publication et mention de la délivrance du brevet: **11.08.2010**
(21) Numéro de dépôt: 07006012.4
(22) Date de dépôt: 23.03.2007
(51) Int. Cl.: G06K 7/00, H04L 12/56

(54) **Procédé de routage de données sortantes et entrantes dans un chipset NFC**
Verfahren zur Weiterleitung von aus- und eingehenden Daten in ein NFC-Chipset
Method of routing input and output data in an NFC chipset

(30) Priorité: 10.05.2006 FR 0604179; 10.05.2006 FR 0604180
(43) Date de publication de la demande: 14.11.2007
(73) Titulaire: Inside Contactless, 13856 Aix en Provence Cedex 3 (FR)
(72) Inventeur: Charrat, Bruno, 13090 Aix en Provence (FR)
(74) Mandataire: Marchand, André

(56) Documents cités:
- WO-A-98/27670
- WO-A-03/017103
- WO-A-2004/029860

## Description

La présente invention concerne un procédé de routage de données dans un jeu de puces comprenant au moins un processeur hôte et une interface d'émission/réception de données sans contact de type RFID.

La présente invention concerne également un circuit d'émission/réception de données comprenant une interface d'émission/réception de données sans contact de type RFID, un contrôleur et au moins un port d'entrée/sortie pour relier l'interface d'émission/réception de données à un processeur hôte.

La présente invention concerne notamment la réalisation d'un chipset NFC (Near Field Communication).

La technologie NFC est actuellement développée par un consortium industriel regroupé sous le nom de Forum NFC (http://www.nfc-forum.org). La technologie NFC est dérivée de la technologie RFID (Radio Frequency Identification) et utilise des lecteurs NFC présentant plusieurs modes de fonctionnement, à savoir un mode "lecteur" (Reader Mode), un mode "émulation de carte", et un mode "device " (appelé également mode "device-to-device" soit "dispositif à dispositif"). Dans le mode "lecteur", le lecteur NFC fonctionne comme un lecteur RFID conventionnel pour accéder en lecture ou écriture à une puce RFID (carte à puce ou étiquette sans contact). Il émet un champ magnétique, envoie des données par modulation de l'amplitude du champ magnétique et reçoit des données par modulation de charge et couplage inductif. Dans le mode "émulation", décrit par le brevet EP 1 327 222 au nom de la demanderesse, le lecteur NFC fonctionne de façon passive à la manière d'un transpondeur pour dialoguer avec un autre lecteur et être vu par l'autre lecteur comme une puce RFID. Le lecteur n'émet pas de champ magnétique, reçoit des données en démodulant un champ magnétique émis par l'autre lecteur et émet des données par modulation de l'impédance de son circuit d'antenne (modulation de charge). Dans le mode "device", le lecteur doit s'apparier avec un autre lecteur se trouvant également dans le même mode de fonctionnement, et chaque lecteur se place alternativement dans un état passif (sans émission de champ) pour recevoir des données et dans un état actif (avec émission de champ) pour émettre des données.

En sus de ces trois modes de fonctionnement (d'autres modes de fonctionnement pourraient être imaginés dans le futur), un lecteur NFC peut mettre en oeuvre plusieurs protocoles de communication sans contact et est par exemple capable d'échanger des données suivant le protocole ISO 14443-A, le protocole ISO 14443-B, le protocole ISO 15693, etc.. Chaque protocole définit une fréquence d'émission du champ magnétique, une méthode de modulation de l'amplitude du champ magnétique pour émettre des données en mode actif, et une méthode de modulation de charge par couplage inductif pour émettre des données en mode passif. Un lecteur NFC est donc un dispositif multimode et multiprotocole. La demanderesse commercialise par exemple un lecteur NFC sous la désignation "MicroRead".

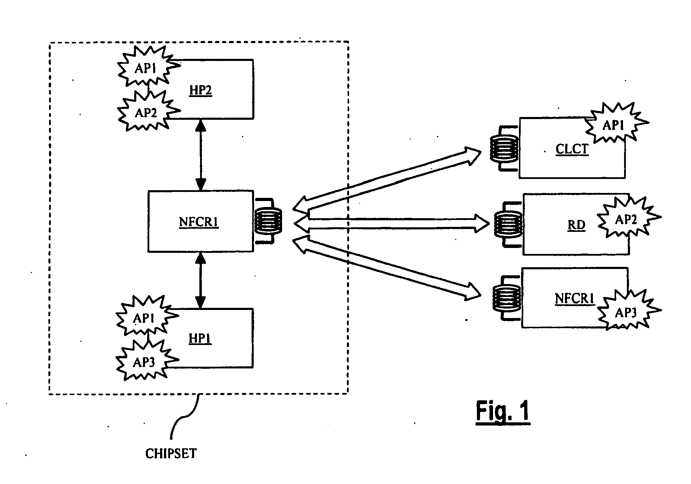

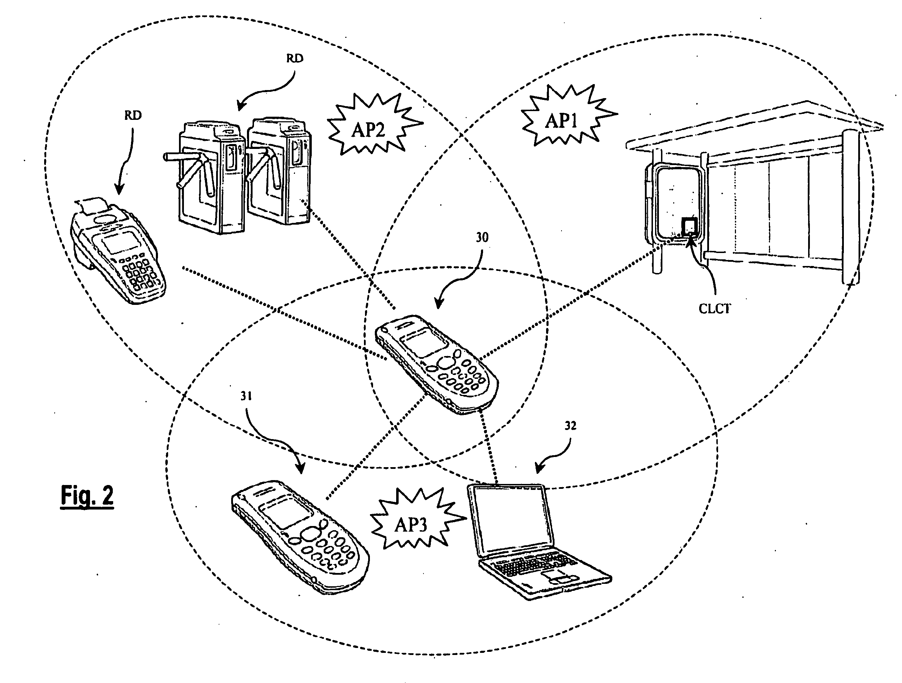

En raison de ses capacités de communication étendues, un lecteur NFC est destiné à être intégré dans des dispositifs portatifs tels des téléphones portables ou des PDA (Assistant Numérique Personnel). On est donc amené à réaliser un chipset NFC du type représenté en figure 1, c'est à dire un ensemble de puces comprenant un lecteur NFC (référencé "NFCR1") et au moins un premier processeur hôte HP1. On entend par "processeur hôte" tout circuit intégré comprenant un microprocesseur ou un microcontrôleur et qui est connecté à un port du lecteur NFC. Dans de nombreuses applications, le chipset comprend également un second processeur hôte HP2. Le premier processeur hôte HP1 est le processeur principal du dispositif dans lequel le lecteur NFC est embarqué, tandis que le second processeur hôte HP2 est un circuit sécurisé. Le processeur hôte HP1 est par exemple le circuit de bande de base d'un téléphone mobile ("baseband" ou circuit de radiotéléphonie) et le processeur hôte HP2 est par exemple une carte SIM (c'est-à-dire le microcontrôleur présent dans une carte SIM). Les ressources du lecteur NFC sont donc mises à la disposition des deux processeurs HP1 pour leur permettre de gérer des applications sans contact. De telles applications sont illustrées sur la figure 2 qui représente un téléphone mobile 30 équipé du chipset NFC de la figure 1. On distingue :
1) des applications de type AP1 : le lecteur NFC du téléphone mobile 30 est en mode lecteur pour lire ou écrire un circuit intégré sans contact CLCT. Le téléphone mobile est dans ce cas utilisé comme un lecteur RFID. Ce type d'application peut être gratuit et consister par exemple dans la lecture de données publicitaires insérées dans un affichage publicitaire d'une aubette. L'application peut aussi être payante et consister par exemple dans la lecture d'informations réservées à des abonnés. Le programme de l'application AP1 est de préférence détenu et exécuté par le processeur HP1 si le service est gratuit ou sera de préférence détenu et exécuté par le processeur HP2 s'il est payant car il nécessite une identification de l'abonné. Ainsi, comme illustré en figure 1, une application AP1 peut être prise en charge par le processeur HP1 ou le processeur HP2.
2) des applications de type AP2 : le lecteur NFC du téléphone 30 est en mode émulation de carte pour être lu par des lecteurs RD conventionnels dans des applications de paiement ou de contrôle d'accès payant (machine de paiement, entrée de métro, etc.). Le téléphone mobile 30 est alors utilisé comme une carte à puce. Le programme de l'application AP2 est de préférence détenu et exécuté par le processeur sécurisé HP2, comme représenté en figure 1, car l'accès au service nécessite une identification de l'abonné.
3) des applications de type AP3 : le lecteur NFC du téléphone 30 est en mode "device" et dialogue avec un autre dispositif, par exemple un lecteur embarqué dans un autre téléphone mobile 31 ou dans un ordinateur 32. Ce type d'application est généralement gratuit et permet de transférer des paquets de données d'un dispositif à l'autre (transfert de fichiers en point à point notamment). Le programme de l'application AP3 est de préférence détenu et exécuté par le processeur non sécurisé HP1, comme illustré en figure 1, qui dispose d'une puissance de calcul supérieure au processeur sécurisé HP2 si celui-ci est un processeur de carte SIM.

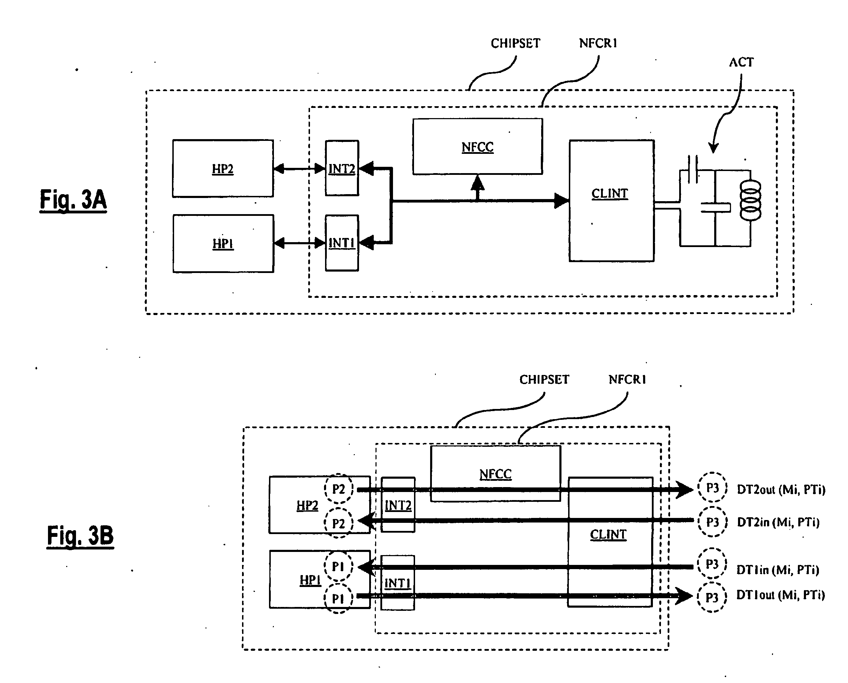

Ainsi, la réalisation d'un chipset NFC nécessite de prévoir un routage des flux de données entre chacun des processeurs HP1, HP2 et le lecteur NFC (données émises via le canal de transmission de données sans contact) et des flux de données entrantes (données reçues via le canal de transmission de données sans contact) entre le lecteur NFC et chacun des processeurs HP1, HP2. Cela pose un certain nombre de problèmes pratiques qui seront compris en se référant aux figures 3A, 3B.

La figure 3A représente schématiquement l'architecture du lecteur NFC. Le lecteur comprend une interface d'émission/réception de données sans contact CLINT équipée d'un circuit d'antenne ACT, des interfaces de communication filaires INT1, INT2 reliées à l'interface CLINT, et un contrôleur NFCC. L'interface INT1 est connectée au processeur hôte HP1 et l'interface INT2 connectée au processeur hôte HP2, l'ensemble formant un chipset NFC (désigné "CHIPSET").

La figure 3B représente les flux de données devant être aiguillés pour que les ressources de l'interface d'émission/réception de données sans contact CLINT puissent être utilisées par chacun des processeurs HP1, HP2. On suppose dans un souci de simplicité que l'interface CLINT peut émettre ou recevoir des données selon trois protocoles PT1, PT2, PT3 seulement, par exemple ISO 14443-A, ISO 14443-B et ISO 15693, et présente les trois modes de fonctionnement M1, M2, M3 susmentionnés (mode lecteur, mode émulation et mode "device"). On distingue ainsi quatre types différents de flux de données :
1) un flux de données sortant DT1out(Mi, PTi) issu d'un point source P1 localisé dans le processeur HP1, transmis à un point de destination P3 localisé dans l'interface CLINT puis transmis par celle-ci dans un canal de transmission de données sans contact créé suivant un protocole PTi (PT1, PT2 ou PT3) et un mode de fonctionnement Mi (M1, M2 ou M3),
2) un flux de données sortant DT2out (Mi, PTi) issu d'un point source P2 localisé dans le processeur HP2, transmis à un point de destination P3 localisé dans l'interface CLINT puis transmis par celle-ci via un canal de transmission de données sans contact créé suivant un protocole PTi et un mode de fonctionnement Mi,
3) un flux de données entrant DT1in(Mi, PTi) reçu par l'interface CLINT via un canal de transmission de données sans contact créé suivant un protocole PTi et un mode de fonctionnement Mi, puis transmis par l'interface CLINT à partir d'un point source P3 jusqu'à un point de destination P1 se trouvant dans le processeur HP1,
4) un flux de données entrant DT2in(Mi, PTi) reçu par l'interface CLINT via un canal de transmission de données sans contact créé suivant un protocole PTi et un mode de fonctionnement Mi, puis transmis par l'interface CLINT à partir d'un point source P3 jusqu'à un point de destination P2 se trouvant dans le processeur HP2.

Chaque flux de données sortant pouvant être émis dans trois modes de fonctionnement M1, M2, M3 et selon trois protocoles PT1, PT2, PT3 il vient que 9 configurations différentes sont possibles pour chaque flux de données sortant (en supposant que chaque combinaison mode Mi et protocole PTi soit autorisée). Cela signifie qu'il ne suffit pas que l'un des processeurs HP1 ou HP2 envoie à l'interface CLINT les données à émettre. Le processeur doit également préciser, pour chaque chaîne de données émise, la configuration mode/protocole Mi/PTi à utiliser par l'interface CLINT pour transmettre ces données dans un canal de transmission de données sans contact.

Pour permettre le routage de données sortantes tout en permettant de configurer l'interface CLINT de façon appropriée, il a été proposé de prévoir un protocole de transfert de données HCI ("Host Controler Interface") de type "universel", permettant à tout type de processeur hôte de fournir à l'interface CLINT des données à émettre, tout en spécifiant la configuration à utiliser (protocole PTi et mode de fonctionnement Mi) pour transmettre les données dans le canal de communication sans contact. Un tel protocole HCI prévoit des trames de données comprenant chacune des champs d'en-tête et des champs de données. Les champs d'en-tête comprennent les informations nécessaires au contrôle de l'interface CLINT, notamment des champs spécifiant les points de départ et de destination des données, le mode de fonctionnement et le protocole à utiliser par l'interface CLINT.

Un premier problème que l'invention vise à résoudre est que le protocole HCI classique prévoit des trames de données ayant des champs d'en-tête longs et complexes, nécessitant un temps de traitement non négligeable avant le traitement des données elles-mêmes. Ce problème est appelé "overheading", ce qui signifie que des en-têtes de trames trop longues surchargent les flux de données et grèvent le temps de transmission des données. Ces champs d'en-tête de grande taille nécessitent de plus des circuits tampon (buffers) de grande taille et une puissance de traitement élevée.

Ainsi, un premier objectif de la présente invention est de prévoir un procédé de routage de données dans un chipset NFC qui soit simple à mettre en oeuvre et ne nécessite pas des champs d'en-tête de grande longueur, tout en permettant le paramétrage du protocole et du mode de fonctionnement de l'interface d'émission/réception de données sans contact.

Un autre problème que l'invention vise à résoudre, distinct du premier problème, concerne le routage des données entrantes (DT1in et DT2in). Lorsque des données entrantes sont reçues, l'interface d'émission/réception de données sans contact CLINT ainsi que le contrôleur NFCC ne savent pas nécessairement quel est le processeur hôte destinataire de ces données. En conséquence, les données sont envoyées aux deux processeurs, à charge au processeur qui n'est pas concerné par les données de ne pas y répondre.

La demande WO 2004/029860 propose un procédé de routage qui consiste à utiliser, comme moyen de routage de données entrantes, le champ APDU (Application Protocol Data Unit) se trouvant dans des commandes reçues via le canal de transmission de données sans contact. Toutefois, comme indiqué en page 13 de cette demande, ce procédé nécessite que de nouveaux protocoles soient développés pour mettre en oeuvre le routage, ce qui signifie que l'organe externe émettant les données dans le canal de transmission de données sans contact doit spécifier à quel organe interne (quel processeur hôte) les données sont destinées.

Or, dans de nombreuses applications, l'organe externe émettant des données n'est pas conçu pour donner des indications de routage permettant de savoir quel est le processeur destinataire de ces données. En effet le routage est un problème interne lié au fait que plusieurs processeurs d'un même chipset partagent la même interface d'émission/réception de données sans contact. Il est donc peu probable qu'un protocole de routage universel soit intégré dans un proche avenir dans des dispositifs ne répondant pas à une norme NFC. Par exemple, un lecteur conventionnel utilisé pour du paiement ou du contrôle d'accès envoie des commandes d'authentification et/ou de vérification de code secret qui s'adressent à des cartes à puce sans contact. Au cours d'une authentification, un tel lecteur ne sait donc pas s'il s'adresse à une vraie carte sans contact ou à un chipset NFC en mode émulation de carte. Par conséquent, un tel lecteur n'est pas conçu pour émettre des paramètres permettant le routage, à l'intérieur du chipset, des données d'application qu'il envoie.

Ainsi, un autre objectif de l'invention est de prévoir un procédé permettant de déterminer, dans un chipset NFC, le processeur hôte destinataire de données reçues via un canal de transmission de données sans contact, sans devoir nécessairement analyser le contenu de ces données.

Au moins un objectif de l'invention est atteint par la prévision d'un procédé de routage de données dans un jeu de puces comprenant au moins un processeur hôte, un contrôleur (NFCC) et une interface d'émission/réception de données sans contact de type RFID, comprenant les étapes consistant à : en réponse à une commande d'ouverture de chemin de données émise par un point source localisé dans le processeur hôte, et désignant un point de destination localisé dans l'interface d'émission/réception de données sans contact, le contrôleur (NFCC) : définit un chemin de données reliant le point source au point de destination en attribuant au chemin de données un numéro de canal de routage et enregistre dans une table de routage le numéro de canal de routage et des paramètres de routage comprenant au moins un identifiant du point source et un identifiant du point de destination ; envoie au point de destination des données fournies par le point source en les encapsulant dans une trame ayant un champ d'en-tête comprenant le numéro de canal de routage ; et sur réception de données encapsulées dans une trame ayant un champ d'en-tête comprenant le numéro de canal de routage, le contrôleur recherche un point de destination des données dans la table de routage en utilisant le numéro de canal de routage en tant qu'index de sélection du point de destination.

Selon un mode de réalisation mis en oeuvre dans un jeu de puces dans lequel l'interface d'émission/réception de données sans contact est configurable selon plusieurs modes de fonctionnement et selon plusieurs protocoles de communication sans contact, le procédé comprend les étapes consistant à : en réponse à une commande d'ouverture de chemin de données émise par un point source localisé dans le processeur hôte et désignant un point de destination localisé dans l'interface d'émission/réception de données sans contact, le contrôleur ouvre un chemin de données entre le point source et le point de destination en attribuant au chemin de données un numéro de canal de routage et en enregistrant dans la table de routage le numéro de canal de routage et des paramètres de routage comprenant un paramètre de mode de fonctionnement de l'interface d'émission/réception de données sans contact et un paramètre de protocole de communication sans contact, et configurer l'interface d'émission/réception de données sans contact émet des données dans un canal de transmission de données sans contact en utilisant les paramètres de mode de fonctionnement et de protocole de communication sans contact figurant dans la table de routage pour le chemin de données par l'intermédiaire duquel les données à émettre ont été reçues.

Selon un mode de réalisation mis en oeuvre dans un jeu de puces comprenant au moins deux processeurs hôtes, la table de routage pour ouvrir un chemin de données entre les deux processeurs hôtes.

Selon un mode de réalisation, le procédé comprend l'utilisation par le contrôleur une étape de prévision de commandes de création de chemins de données comprenant des paramètres de routage et des paramètres de configuration de l'interface d'émission/réception de données sans contact à enregistrer dans la table de routage.

Selon un mode de réalisation la table de routage est remplie ou vidée de façon dynamique par le contrôleur lorsque des chemins de données ayant un point source localisé dans un processeur hôte sont créés ou fermés.

Selon un mode de réalisation, le procédé comprend l'utilisation par le contrôleur d'une table de routage comprenant des données préenregistrésayant un point source localisé dans un processeur hôte.

Selon un mode de réalisation mis en oeuvre dans un jeu de puces comprenant au moins deux processeurs hôtes, lorsque des données sont reçues par l'interface d'émission/réception de données sans contact via un canal de transmission de données sans contact, au moins un processeur hôte destinataire des données le contrôleur identifie en utilisant au moins comme critères de détermination le mode de fonctionnement et le protocole de communication sans contact utilisés par l'interface d'émission/réception de données sans contact pour créer le canal de transmission de données sans contact par l'intermédiaire duquel les données sont reçues.

Selon un mode de réalisation, le procédé comprend les étapes consistant à préenregistrer dans la table de routage des chemins de données ayant un point source localisé dans l'interface d'émission/réception de données sans contact, et pour chacun de ces chemins de données, au moins un identifiant d'un point de destination, un paramètre de mode de fonctionnement de l'interface d'émission/réception de données sans contact et un paramètre de protocole de communication sans contact, et, lorsque des données sont reçues par l'interface d'émission/réception de données sans contact via un canal de transmission de données sans contact, détermination par le contrôleur d'au moins un point de destination des données en recherchant dans la table de routage un chemin de données ayant un paramètre de mode de fonctionnement et un paramètre de protocole de communication sans contact correspondant aux paramètres de mode de fonctionnement et de protocole de communication sans contact utilisés par l'interface d'émission/réception de données sans contact pour créer le canal de transmission de données sans contact par l'intermédiaire duquel les données sont reçues.

Selon un mode de réalisation, des points sources ou des points de destination enregistrés dans la table de routage sont des services prenant la forme de programmes exécutés par un processeur hôte et auxquels le contrôleur attribue des chemins de données.

Selon un mode de réalisation, les paramètres de routage mémorisés dans la table de routage comprennent également un identifiant d'un point de notification devant recevoir copie des données envoyées au point de destination.

Selon un mode de réalisation, le procédé est mis en oeuvre dans un jeu de puces dans lequel un processeur hôte est un circuit sécurisé tel un circuit intégré de carte SIM.

L'invention concerne également un dispositif d'émission/réception de données comprenant une interface d'émission/réception de données sans contact de type RFID, un contrôleur et au moins un port d'entrée/sortie pour relier l'interface d'émission/réception de données sans contact à un processeur hôte, dans lequel le contrôleur est configuré pour : en réponse à une commande d'ouverture de chemin de données émise par un point source localisé dans un processeur hôte et désignant un point de destination localisé dans l'interface d'émission/réception de données sans contact, ouvrir un chemin de données entre le point source et un point de destination en attribuant au chemin de données un numéro de canal de routage et en enregistrant dans une table de routage le numéro de canal de routage et des paramètres de routage comprenant au moins un identifiant du point source et un identifiant du point de destination, et, sur réception de données encapsulées dans une trame ayant un champ d'en-tête comprenant le numéro de canal de routage, rechercher un point de destination des données dans la table de routage en utilisant le numéro de canal de routage en tant qu'index de sélection du point de destination.

Selon un mode de réalisation, l'interface d'émission/réception de données sans contact est configurable selon plusieurs modes de fonctionnement et selon plusieurs protocoles de communication sans contact, le contrôleur est configuré pour, en réponse à une commande d'ouverture de chemin de données émise par un point source localisé dans le processeur hôte et désignant un point de destination localisé dans l'interface d'émission/réception de données sans contact, ouvrir un chemin de données entre le point source et le point de destination en attribuant au chemin de données un numéro de canal de routage et en enregistrant dans la table de routage le numéro de canal de routage et des paramètres de routage comprenant un paramètre de mode de fonctionnement de l'interface d'émission/réception de données sans contact et un paramètre de protocole de communication sans contact, et l'interface d'émission/réception de données sans contact est configurée pour émettre des données dans un canal de transmission de données sans contact en utilisant les paramètres de mode de fonctionnement et de protocole de communication sans contact figurant dans la table de routage pour le chemin de données par l'intermédiaire duquel les données à émettre ont été reçues.

Selon un mode de réalisation, le dispositif comprend au moins deux ports d'entrée/sortie et le contrôleur utilise également la table de routage pour ouvrir un chemin de données entre deux processeurs hôtes.

Selon un mode de réalisation, le contrôleur est configuré pour décoder des commandes de création de chemins de données comprenant des paramètres de routage et des paramètres de configuration de l'interface d'émission/réception de données sans contact, et pour enregistrer dans la table de routage les paramètres de routage et de configuration présents dans les commandes.

Selon un mode de réalisation, le contrôleur est configuré pour remplir ou vider de façon dynamique la table de routage lorsque des chemins de données ayant un point source localisé dans un processeur hôte sont créés ou fermés.

Selon un mode de réalisation, le processeur hôte est configuré pour préenregistrer dans la table de routage des chemins de données ayant un point source localisé dans un processeur hôte.

Selon un mode de réalisation, le contrôleur ou l'interface d'émission/réception de données sans contact est configuré pour, lorsque des données sont reçues par l'interface d'émission/réception de données sans contact via un canal de transmission de données sans contact, déterminer un point de destination des données en utilisant comme critères de détermination le mode de fonctionnement et le protocole de communication sans contact utilisés par l'interface d'émission/réception de données sans contact pour créer le canal de transmission de données sans contact par l'intermédiaire duquel les données sont reçues.

Selon un mode de réalisation, le contrôleur est configuré pour : préenregistrer dans la table de routage des chemins de données ayant un point source localisé dans l'interface d'émission / réception de données sans contact, et pour chacun de ces chemins de données, au moins un identifiant d'un point de destination, un paramètre de mode de fonctionnement de l'interface d'émission/réception de données sans contact et un paramètre de protocole de communication sans contact, et, lorsque des données sont reçues par l'interface d'émission/réception de données sans contact via un canal de transmission de données sans contact, déterminer au moins un point de destination des données en recherchant dans la table de routage un chemin de données ayant un paramètre de mode de fonctionnement et un paramètre de protocole de communication sans contact correspondant aux paramètres de mode de fonctionnement et de protocole de communication sans contact utilisés par l'interface d'émission/réception de données sans contact pour créer le canal de transmission de données sans contact par l'intermédiaire duquel les données sont reçues.

Selon un mode de réalisation, des points sources ou des points de destination enregistrés dans la table de routage sont des services exécutés par un processeur hôte.

Selon un mode de réalisation, les paramètres de routage mémorisés dans la table de routage comprennent également un identifiant d'un point de notification devant recevoir copie des données envoyées au point de destination.

Selon un mode de réalisation, le dispositif est relié à un processeur hôte formé par un circuit sécurisé tel un circuit intégré de carte SIM.

Ces objets, caractéristiques et avantages ainsi que d'autres de la présente invention seront exposés plus en détail dans la description suivante du procédé de l'invention, faite à titre non limitatif en relation avec les figures jointes parmi lesquelles :
- la figure 1 précédemment décrite représente sous forme de bloc une architecture classique de chipset NFC, et des circuits sans contact avec lesquels le chipset NFC peut dialoguer,
- la figure 2 précédemment décrite illustre diverses applications d'un chipset NFC intégré dans un téléphone mobile,
- la figure 3A précédemment décrite représente sous forme de bloc l'architecture classique d'un lecteur NFC présent dans le chipset NFC de la figure 1,
- la figure 3B précédemment décrite représente des flux de données traversant le chipset NFC et correspondant à différentes applications,
- la figure 4 illustre de façon schématique la mise en oeuvre du procédé de routage selon l'invention dans un chipset NFC,
- la figure 5 représente un exemple d'architecture matérielle d'un lecteur NFC présent dans le chipset de la figure 4, et
- la figure 6 représente un exemple d'architecture logicielle du lecteur NFC de la figure 5.

### Premier aspect de l'invention : un procédé de routage de données basé sur l'utilisation d'une table de routage

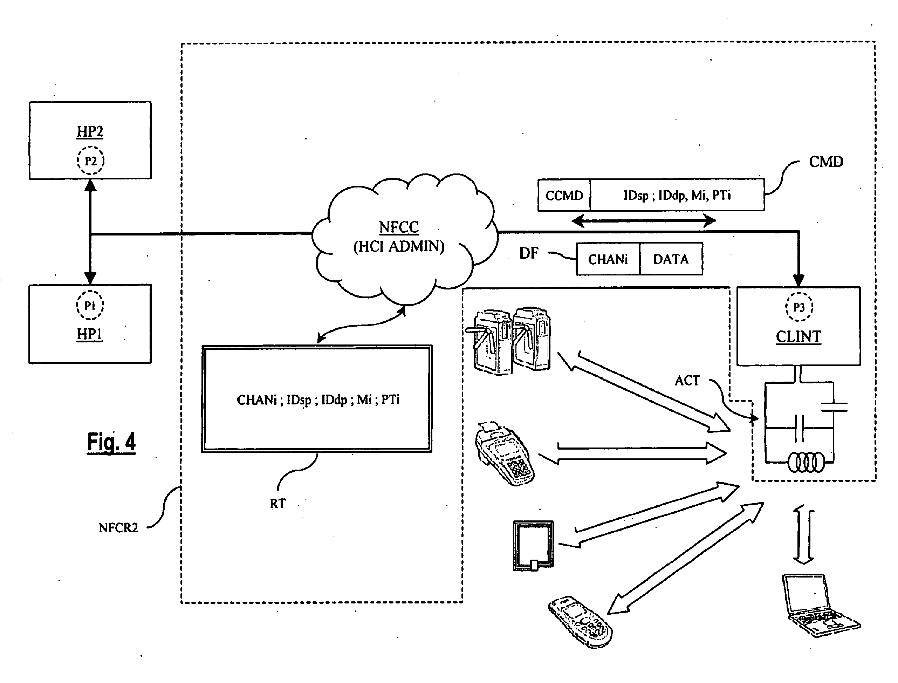

La figure 4 illustre de façon schématique la mise en oeuvre du procédé de routage selon l'invention. Le procédé est mis en oeuvre dans un chipset NFC comprenant un lecteur NFC référencé "NFCR2" et des processeurs hôtes HP1, HP2 déjà décrits plus haut. Le lecteur NFCR2 comprend les mêmes organes que le lecteur NFCR1 décrit plus haut, notamment un contrôleur NFCC et une interface d'émission/réception de données sans contact CLINT équipée d'un circuit d'antenne ACT. Dans un souci de simplicité, on suppose que l'interface CLINT ne peut émettre ou recevoir des données que selon trois protocoles PTi, à savoir le protocole PT1 (ISO 14443-A ou "ISOA"), le protocole PT2 (ISO 14443-B ou "ISOB") et le protocole PT3 (ISO 15693 ou "ISO15"). Elle présente par ailleurs les trois modes de fonctionnement Mi susmentionnés, à savoir M1 (Mode "lecteur"), M2 (mode "émulation de carte") et M3 (mode "device").

Des points source ou destination d'un flux de données dans le chipset sont désignés P1 (point localisé dans le processeur hôte HP1), P2 (point localisé dans le processeur hôte HP2) et P3 (point localisé dans l'interface sans contact CLINT).

Selon l'invention, le contrôleur NFCC du lecteur NFC est utilisé en tant qu'administrateur d'un protocole HCI (Host Computer Interface) qui présente les caractéristiques suivantes :
- l'utilisation d'une table de routage RT dans laquelle sont enregistrés des chemins de données, chaque chemin de données étant identifié par un numéro de canal de routage CHANi,
- l'utilisation de commandes CMD permettant la gestion des chemins de données (canaux de routage), notamment des commandes d'ouverture et de fermeture de chemins de données, et
- l'utilisation de trames de données DF comprenant un champ d'en-tête et un champ de données (DATA), le champ d'en-tête comportant un numéro de canal de routage CHANi.

Les chemins de données enregistrés dans la table de routage sont différentiés les uns des autres au moins par les paramètres suivant :
CHANi; IDsp ; IDdp, Mi, PTi

CHANi étant le numéro de canal de routage attribué au chemin de données, IDsp un identifiant du point source du chemin de données, IDdp un identifiant du point destination du chemin de données, Mi et PTi étant le mode de fonctionnement et le protocole de communication sans contact utilisés par l'interface CLINT pour émettre ou recevoir des données via un canal de transmission de données sans contact.

Des exemples de commandes de routage ainsi que des exemples de trames de données sont décrits en Annexe 1 qui fait partie intégrante de la description. Toutes les commandes pouvant être prévues ne seront pas décrites ici, dans un souci de simplicité. L'Annexe 1 décrit des commandes essentielles de création de route, de modification de route et de suppression de route, et les réponses à de telles commandes (messages de confirmation ou d'erreur). L'Annexe 1 décrit également le format des trames de données DF, qui présente avantageusement un champ d'en-tête de taille réduite ne comprenant que 8 bits.

Les commandes d'ouverture, de fermeture ou de modification d'un chemin de données sont émises par l'un des processeurs hôtes HP1, HP2 ou par l'interface CLINT et sont traitées par le contrôleur NFCC. Ces commandes spécifient le mode de fonctionnement Mi et le protocole PTi de l'interface CLINT pour le chemin de données concerné. Si l'ouverture d'un chemin de données est demandée par l'un des processeurs hôtes HP1 ou HP2, le mode Mi et le protocole PTi figurant dans la commande sont utilisés par le contrôleur NFCC pour configurer l'interface CLINT en ce qui concerne le canal de communication sans contact que l'interface CLINT doit créer pour émettre les données qui seront reçues via le chemin de données. Si l'ouverture d'un chemin de données est demandée par l'interface CLINT, le mode de fonctionnement Mi et le protocole PTi spécifiés dans la commande émise par l'interface CLINT sont informatifs et précisent les conditions de mode de fonctionnement et de protocole dans lesquelles l'interface CLINT a reçu les données qu'elle veut transmettre dans le chemin de données.

La création proprement dite d'un chemin de données est assurée par le contrôleur NFCC en tant qu'administrateur HCI ("HCI ADMIN"). Lorsqu'une commande de création d'un chemin de données est reçue (commande "Création d'une route") et est recevable, le contrôleur NFCC attribue à la route un numéro de canal de routage CHANi, puis inscrit dans la table de routage RT les paramètres IDsp, IDdp, Mi, PTi indiqués dans la commande, et envoie ensuite un message de confirmation à l'entité ayant émis la commande.

Un exemple de table de routage créée par le contrôleur NFCC est décrit par le tableau 1 en Annexe 2, qui fait partie intégrante de la description. Cette table de routage est créée après réception d'une série de commandes d'ouverture de route ayant des points sources localisés dans l'un des processeurs HP1 ou HP2 (soit un point source P1 ou P2). Optionnellement, le contrôleur peut définir un point destinataire secondaire destiné à recevoir copie des données circulant dans le chemin de données. Le destinataire secondaire ou point de notification est déterminé par le contrôleur à partir d'une table de notification (non représentée sur les figures) qui lui indique les chemins de données pour lesquels les données doivent être notifiées à l'autre processeur hôte. Bien que présentée de façon statique dans le tableau 1, la table de routage est dynamique et est mise à jour en temps réel en fonction des commandes de création, de modification ou de suppression reçues par le contrôleur NFCC.

Dans une variante de réalisation, la table de routage est statique et a été préenregistrée par le contrôleur NFCC, par exemple à la demande de l'un des processeurs hôtes et à la mise sous tension du chipset. Le tableau 2 en Annexe 2 décrit un exemple de table de routage préenregistrée ayant comme points sources les points P1 ou P2 localisés dans les processeurs hôtes HP1, HP2. Le numéro de canal CHANi peut également être préenregistré dans la table pour chaque configuration de routage envisageable. Dans une telle table préenregistrée, un champ "occupé" est prévu dans chaque ligne de la table (une ligne correspondant à un canal de routage). Le contrôleur NFCC inscrit la valeur "1" dans le champ "occupé" lorsqu'il ouvre le chemin de données correspondant, et inscrit la valeur "0" en réponse à une commande de suppression du chemin de données.

La transmission des données reçues dans les trames de données est également sous le contrôle du contrôleur NFCC, qui se réfère à la table de routage pour déterminer les points de destination de ces données. Avantageusement, comme cela apparaît dans le format des trames de données décrites en Annexe 1, il n'est pas nécessaire que le point source qui envoie les données au processeur spécifie tous les paramètres du canal de routage utilisé : le champ d'en-tête de la trame de données comprend simplement des bits de paramétrage T et L et 6 bits de numéro de canal (permettant de router simultanément 63 chemins de données, le canal "0" étant réservé à l'administration du protocole HCI).

Ainsi, sur réception d'une trame de données, le contrôleur NFCC renvoie les données au point de destination désigné dans la table de routage, en utilisant le numéro de canal en tant qu'index pour trouver ce point de destination dans la table de routage (ainsi qu'éventuellement le point de notification). Si le point de destination est le point P3 (interface CLINT), le contrôleur NFCC assure le paramétrage de l'interface CLINT pour que celle-ci envoie les données dans un canal de transmission de données sans contact conforme aux informations de protocole sans contact PTi et de mode de fonctionnement Mi figurant dans la table de routage. Dans une variante de réalisation, l'interface CLINT assure elle-même son paramétrage en lisant la table de routage lorsque des données sont reçues dans une trame de données (ce qui nécessite qu'une partie des attributions du contrôleur NFCC soit transférée dans l'interface CLINT).

Ainsi, un autre avantage de la présente invention est que la table de routage permet le paramétrage de l'interface CLINT sans qu'il soit nécessaire d'inclure les paramètres de mode de fonctionnement Mi et de protocole de communication sans contact PTi dans les en-têtes des trames de données. La table de routage selon l'invention n'est donc pas une simple table de routage au sens conventionnel du terme, mais forme également une table de paramétrage.

Le tableau 3 en Annexe 2 décrit un exemple de table de routage dynamique comprenant des chemins de données créés à la demande de l'interface CLINT (ayant P3 comme point source). Comme on l'a indiqué au préambule, le problème que pose le routage de données entrantes (données reçues via un canal de communication sans contact) est que l'interface CLINT ainsi que le contrôleur NFCC ne savent pas nécessairement quel est le processeur hôte destinataire de ces données. En conséquence, la table de routage créée ici par le contrôleur NFCC à la demande de l'interface CLINT indique que les données doivent être envoyées aux deux points de destination P1, P2 localisés dans les deux processeurs hôtes HP1, HP2, à charge au processeur hôte qui n'est pas concerné par les données de ne pas y répondre et de laisser l'autre processeur hôte envoyer à l'interface CLINT des données de réponse.

Il sera noté ici que les chemins de données créés à la demande de l'un des processeurs hôtes HP1, HP2 ou à la demande de l'interface CLINT sont de préférence bidirectionnels. Ainsi, par exemple, un fois qu'un chemin de données a été créé par un point P1 localisé dans le processeur HP1, pour émettre des données dans un canal de communication sans contact définit par le paramètre de mode M2 et le protocole PT2, toutes les données reçues par l'interface CLINT dans le mode M2 et suivant le protocole PT2 seront envoyées dans ce chemin de données et seront donc reçues par le point P1. L'homme de l'art notera également que la prévision de chemins de données bidirectionnels impose une gestion des conflits éventuels, en interdisant que deux chemins bidirectionnels ayant des points source et/ou destination différents utilisent les mêmes paramètres de mode Mi et de protocole PTi pour l'interface CLINT. Par exemple, la table de routage décrite par le tableau 1 représente des chemins de données qui ne peuvent coexister (par exemple canal 1 et canal 9, ces chemins de données n'étant décrits dans le même tableau qu'à titre illustratif).

### Second aspect de l'invention : routage des données entrantes en fonction des paramètres de mode et de protocole de l'interface sans contact

La présente invention se base ici sur deux constatations :
1) les processeurs hôtes présents dans un chipset NFC sont "spécialisés" dans certaines applications ou types d'application en raison de leur nature (sécurisé ou non, processeur de carte SIM ou processeur Baseband), de leur puissance de traitement et des organes de traitement qu'ils comportent,
2) parmi les diverses applications qu'un chipset NFC peut être amené à gérer, chaque application ou type d'application correspond généralement à un mode de fonctionnement déterminé de l'interface d'émission/réception de données sans contact CLINT et à un protocole de communication sans contact déterminé (PT1, PT2, PT3...).

En conséquence, une combinaison d'un mode de fonctionnement Mi de l'interface CLINT et d'un protocole PTi peut correspondre à un type d'application qui est destiné à être géré par un processeur hôte particulier. Cela apparaît sur la figure 1 où l'on voit que des applications sécurisées AP2 en mode émulation sont généralement gérées par une carte SIM (processeur HP2), alors que des applications non sécurisées du type AP3 (par exemple transfert de fichier en point à point) sont préférentiellement gérées par le processeur Baseband en raison de sa puissance de traitement plus élevé et de l'absence de sécurisation du transfert. Par ailleurs, les applications sécurisées en mode émulation reposent généralement sur les protocoles ISOA et ISOB, tandis que le mode ISO 13693, offrant une plus grande distance de communication, est préférentiellement destiné à des applications non sécurisées générées par le processeur hôte HP1 et non par le processeur HP2 si celui-ci est une carte SIM.

Ainsi, selon l'invention, on prédéfinit des règles de routage de données entrantes en fonction du mode de fonctionnement Mi de l'interface CLINT et du protocole de communication sans contact PTi suivant lequel les données sont reçues. Les règles de routage prédéterminées sont par exemple les suivantes (exemples donnés à titre non limitatif) :
- quand l'interface CLINT reçoit des données en mode lecteur ISO A, les données sont envoyées prioritairement au processeur hôte HP1 et sont notifiées au processeur hôte HP2,
- quand l'interface CLINT reçoit des données en mode lecteur ISO B, les données sont envoyées prioritairement au processeur hôte HP1 et sont notifiées au processeur hôte HP2,
- quand l'interface CLINT reçoit des données en mode lecteur ISO 15693, les données sont envoyées prioritairement au processeur hôte HP2 et ne sont pas notifiées au processeur hôte HP1,
- quand l'interface CLINT reçoit des données en mode émulation carte ISO A, les données sont envoyées prioritairement au processeur hôte HP2 et ne sont pas notifiées au processeur hôte HP1,
- quand l'interface CLINT reçoit des données en mode émulation carte ISO B vers processeur hôte HP1, les données sont envoyées prioritairement au processeur hôte HP1 et ne sont pas notifiées au processeur hôte HP2,
- quand l'interface CLINT reçoit des données en mode émulation carte ISO 15693, les données sont seulement notifiées au processeur hôte HP2 et ne sont ni envoyées ni notifiées au processeur hôte HP1,
- quand l'interface CLINT reçoit des données en mode "device" ISO A (appariement géré par le processeur hôte HP1), les données sont envoyées prioritairement au processeur hôte HP1 et sont notifiées au processeur hôte HP2,
- quand l'interface CLINT reçoit des données en mode "device" ISO B, les données sont bloquées (aucune action),
- quand l'interface CLINT reçoit des données en mode "device" ISO 15693 (appariement géré par le processeur hôte HP1), les données sont envoyées prioritairement au processeur hôte HP1 et sont notifiées au processeur hôte HP2.

Cet ensemble de règles permet de définir une table de routage des données entrantes, telle que décrite par le tableau 4 en Annexe 2. Cette table de routage est statique et est préenregistrée par le contrôleur NFCC, par exemple à la demande du processeur sécurisé HP2 et à la mise sous tension du chipset NFC. Cette table est bien entendu susceptible de modification en temps réel.

L'homme de l'art notera que le second aspect de l'invention est indépendant du premier, dans la mesure où le routage des données entrantes suivant le procédé qui vient d'être décrit peut être mis en oeuvre en utilisant un protocole HCI classique, c'est-à-dire sans utilisation d'une table de routage et de trames de données ayant un champ d'en-tête de taille réduite.

### Exemple d'architecture matérielle et logicielle du lecteur NFC permettant de mettre en oeuvre le procédé selon l'invention

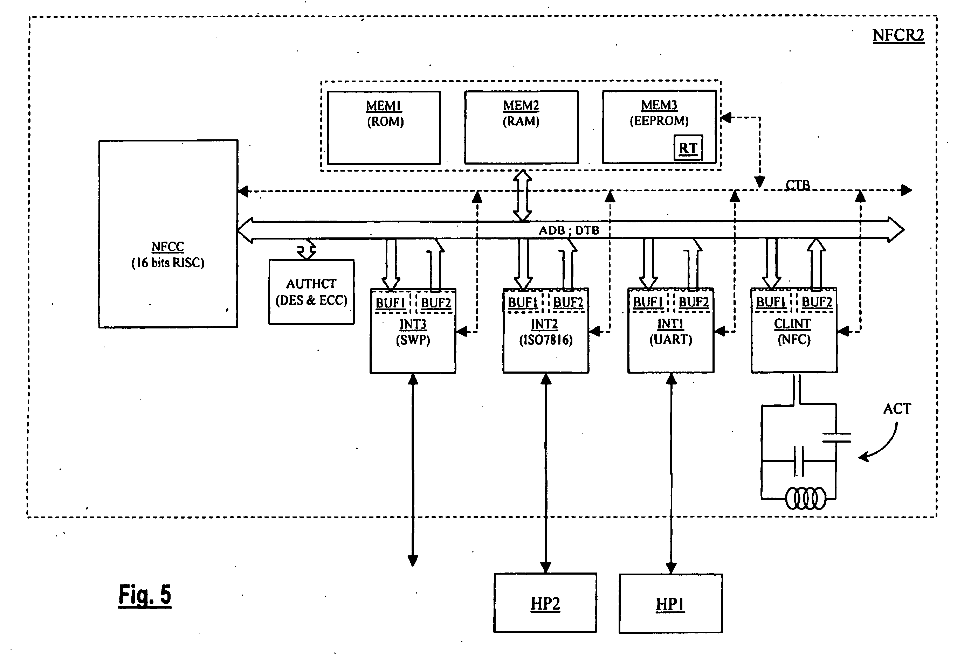

La figure 5 représente un exemple d'architecture matérielle du lecteur NFCR2 de la figure 4. Le lecteur comprend :
- le contrôleur NFCC et l'interface CLINT déjà décrits,
- un plan mémoire comprenant une mémoire programme MEM1 de type ROM (mémoire morte), une mémoire de données MEM2 de type RAM (mémoire vive), et une mémoire effaçable et programmable électriquement MEM3 de type EEPROM dans laquelle la table de routage RT est enregistrée,
- un circuit d'authentification et de correction d'erreur AUTHCT comprenant des algorithmes DES et ECC (Error Correction Code),
- un port de connexion INT1 de type UART (Universal Asynchronous Receiving Transmitting), auquel le processeur hôte HP1 est ici connecté,
- un port de connexion INT2 de type ISO7816 auquel le processeur hôte HP2 est ici connecté (le processeur HP2 étant supposé ici être une carte SIM),
- un port de connexion INT3 de type SWP (Single Wire Protocol) permettant de connecter un troisième processeur hôte, par exemple une autre carte sécurisée,
- un bus de données DTB et un bus d'adresse ADB reliant le plan mémoire, le contrôleur NFCC, l'interface CLINT et les ports INT1, INT2, INT3, et
- un bus de contrôle CTB permettant au contrôleur NFCC de contrôler et d'accéder à ces divers éléments en lecture et/ou écriture.

L'interface CLINT et les ports INT1, INT2, INT3 comportent chacun un tampon d'entrée BUF1 à entrée parallèle et un tampon de sortie BUF2 à sortie parallèle accessible en écriture, respectivement en lecture, via le bus de données et le bus d'adresse. L'échange de données formant les commandes de routage ou les trames de données entre les processeurs hôtes HP1, HP2 et le contrôleur NFCC ou l'interface CLINT s'effectue ainsi par blocs de données de la taille des tampon BUF1, BUF2, et est cadencé par le contrôleur NFCC.

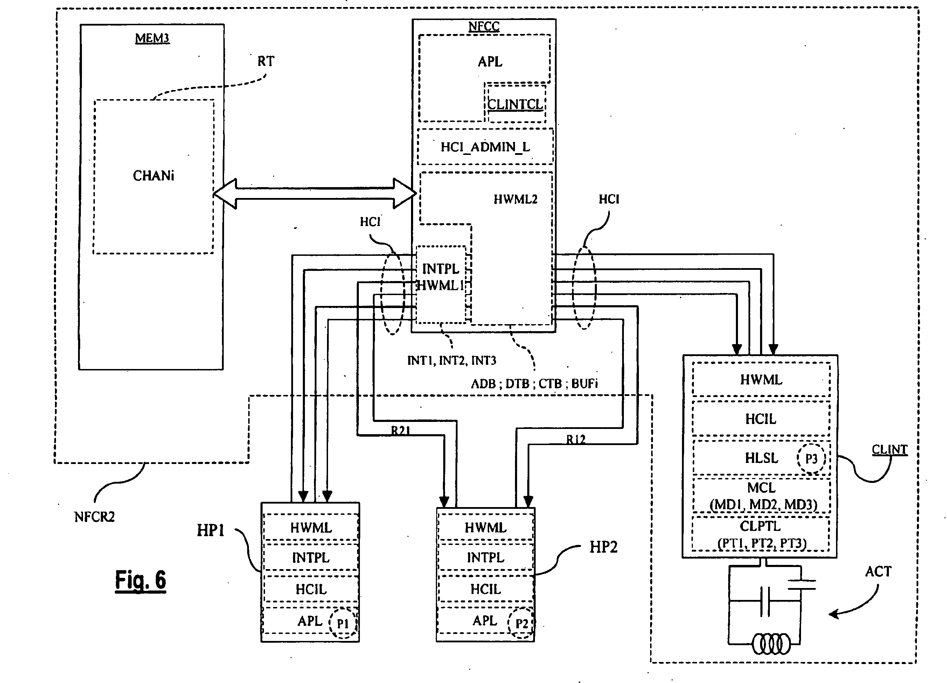

La figure 6 représente un exemple d'architecture logicielle du lecteur NFCR2 et des processeurs hôtes HP1, HP2. Cette architecture logicielle comprend, pour chaque élément du chipset, plusieurs couches logicielles allant du niveau le plus bas (couche liaison de données) au niveau le plus haut (couche application). La représentation qui est faite de ces couches logicielles en figure 6 est simplifiée par rapport à l'architecture logicielle réelle d'un chipset NFC selon l'invention mais est suffisante pour l'homme de l'art souhaitant réaliser l'invention de la manière proposée ici.

Chaque processeur hôte HP1, HP2 comprend au moins quatre couches logicielles, dans un ordre de niveau croissant :
- une couche de plus bas niveau HWML (Hardware Management Layer) qui gère le fonctionnement des éléments matériels (hardware) permettant aux processeurs hôtes d'échanger des données avec le contrôleur NFCC. Il s'agit par exemple de la couche de gestion de l'interface UART pour le processeur HP1 et de la couche de gestion de l'interface ISO7816 pour le processeur HP2.
- une couche INTPL (Interface Protocol Layer) qui gère le protocole des ports de communication INT1, INT1, INT3. Il s'agit par exemple de la couche de gestion du protocole UART pour le processeur HP1 et de la couche de gestion du protocole ISO7816 pour le processeur HP2.
- une couche HCIL (HCI Layer) qui gère le protocole HCI selon l'invention, c'est-à-dire qui gère la création d'un canal de communication en générant les commandes décrites plus haut et en Annexe1 et en traitant les messages de réponse à de telles commandes. Cette couche repose sur les couches INTPL et HWML qui sont quasi transparentes pour elle.
- une couche APL (Application Layer) de haut niveau qui gère les applications RFID telles que celles représentées en figures 2 et 4 (lecture d'une carte à puce ou d'une étiquette électronique, émulation d'une carte à puce, dialogue en mode "device-to-device" avec un processeur externe pour échanger des fichiers, etc..). Cette couche peut comprendre plusieurs programmes application, chacun étant sécurisé ou non (selon les ressources internes du processeur) et chacun utilisant tel type de protocole PTi et tel mode de fonctionnement Mi de l'interface CLINT. Ainsi, cette couche de haut niveau repose sur les couches HWML, INTPL et la couche HCIL selon l'invention, qui sont quasi transparentes pour elle. La rapidité du transfert des données à travers les chemins de données crées grâce à la couche HCIL selon l'invention entraîne avantageusement un accroissement sensible des performances de la couche application APL.

Selon un autre aspect avantageux de l'invention, les points source ou destination P1 et P2 localisés dans les processeurs hôtes sont des "services" (des applications déterminées). Ces services peuvent demander au contrôleur NFCC, chacun indépendamment de l'autre, de créer des chemins de données pour utiliser simultanément l'interface CLINT (sous réserve de collision de modes et de protocoles, comme indiqué plus haut). Ainsi, cette architecture logicielle permet de mettre en oeuvre un service en tant que points source ou destination d'un chemin de données, et permet la création simultanée de plusieurs chemins de données entre deux entités, par exemple entre deux processeurs hôtes ou entre un processeur hôte et l'interface d'émission/réception de données sans contact.

De façon sensiblement similaire, le contrôleur NFCC comporte les couches logicielles suivantes :
- deux couches HWML1 et INTPL du même type que les couches HWML et INTPL présentes dans les processeurs hôtes. Dans un souci de simplification du schéma, ces couches sont représentées dans le processeur NFCC mais sont en réalité localisées dans les ports INT1 et INT2, qui sont considérés comme faisant partie du contrôleur, ainsi que les bus ADB, DTB, CTB. En effet le traitement des protocoles UART et 7816 est assuré ici dans les ports INT1, INT2, qui mettent à la disposition du contrôleur leurs tampons d'entrée et de sortie BUF1, BUF2 via les bus ADB, DTB, CTB.
- une autre couche de bas niveau HWML2 qui permet au contrôleur d'écrire les tampons BUF1 et de lire les tampons BUF2, via les bus ADB, DTB, CTB, en décomposant les trames de données ou les commandes en blocs de données de même taille que les tampons.
- une couche HCI-ADMIN-L ou couche d'administration du protocole HCI, qui dialogue avec les couches HCIL des processeurs hôtes HP1, HP2 en tant qu'administrateur du routage. Ainsi cette couche exécute les tâches d'attribution de chemins de données décrites plus haut, et accède à la table de routage RT en lecture et en écriture via la couche de bas niveau HWML2.
- une couche CLINTCL (Contactless Interface Control Layer) qui gère l'interface CLINT et qui indique à cette dernière le mode Mi dans lequel elle doit se placer et le protocole PTi à utiliser pour émettre des données dans un canal de communication sans contact. A cet effet, la couche CLINTCL exploite les paramètres PTi et Mi présents dans la table de routage. Plus particulièrement, la couche HCI-ADMIN-L écrit ces paramètres dans la table de routage en réponse à des commandes d'ouverture de chemins de données, tandis que la couche CLINTCL recherche ces paramètres dans la table en utilisant comme index le numéro de canal des trames de données envoyées par les processeurs hôtes HP1, HP2. Cette couche contrôle également l'interface CLINT en mode réception de données sans contact et lui demande cycliquement d'effectuer un balayage des modes (mode lecteur, mode émulation et mode "device") et, dans chaque mode, de rechercher des données entrantes. Cela signifie que l'interface CLINT émet à intervalles réguliers un champ magnétique pour interroger d'éventuelles cartes ou étiquettes sans contact (ou autres objets portatifs fonctionnant sans contact) qui pourraient être présentes dans son champ d'interrogation. L'interface CLINT se place également à intervalles réguliers dans un mode d'écoute (mode "émulation") pour détecter si un lecteur en mode actif envoie des messages d'interrogation.
- une couche optionnelle APL qui peut gérer elle-même des applications, à l'instar des processeurs hôtes. En effet, bien que cela n'ait pas été décrit jusqu'à présent pour rester dans l'objet de l'invention, des applications peuvent également être prises en charge par le lecteur NFC lui-même. Dans ce cas, la communication de données entre le contrôleur NFCC et l'interface CLINT peut être faite en passant par le canal de communication HCI selon l'invention, si l'interface CLINT est équipée de la couche INTPL, ce qui est le cas dans le mode de réalisation représenté en figure 6.

Enfin, l'interface CLINT comporte les couches logicielles suivantes :
- du côté du contrôleur NFCC, une couche de bas niveau HWML équivalente à la couche HWML2 du contrôleur NFCC, pour gérer les tampons de données BUF1, BUF2 via les bus ADB, DTB, CTB.
- une couche HCIL (comme indiqué ci-dessus) qui rend l'interface CLINT compatible avec le protocole HCI selon l'invention et offre de plus grandes possibilités d'implémentation de l'invention (notamment le fait que l'interface CLINT génère elle-même les trames de données pour envoyer aux processeurs hôtes des données reçues via un canal de communication sans contact).
- du coté du circuit d'antenne ACT, des couches CLPTL (Contactless Protocol Layer) et MCL (Mode Control Layer) qui assurent le contrôle ou le traitement des signaux électriques appliqués au circuit d'antenne ACT ou reçus par celui-ci, pour la mise en oeuvre des modes de fonctionnement M1, M2, M3 et des protocoles PT1, PT2, PT3.
- entre les couches situées du coté du contrôleur et les couches situées du coté du circuit d'antenne, une couche centrale de haut niveau HLSL (High Level Service Layer) qui permet de définir dans l'interface CLINT plusieurs points source ou destination P3 pour créer plusieurs chemins de données avec des points P1, P2 multiples dans les couches application APL des processeurs hôtes HP1, HP2. Bien entendu, cette architecture de haut niveau est optionnelle et des points multiples P3 localisés virtuellement dans l'interface CLINT peuvent être gérés par le contrôleur NFCC.

Il apparaîtra clairement à l'homme de l'art que la présente invention est susceptible de diverses variantes de réalisation, tant en ce qui concerne le format des commandes, décrites ici uniquement à titre d'exemple (notamment le bit "T" peut être supprimé pour obtenir 124 canaux de routage au lieu de 64 tout en conservant un champ d'en-tête de 8 bits), le format de la table de routage et la gestion dynamique ou statique, ou les deux à la fois, de la table de routage.

### Annexe 1 faisant partie intégrante de la description

### A/ Exemples de commandes de routage

### Format général

| | En-tête | | | Paramètres |
|---|---|---|---|---|
| Taille | 1 bit | 1 bit | 6 bits | 2 ou 3 octets |
| Signifie ou contient | T | L | CCMD | Selon commande |
| Valeur | 1 | 0-1 | 0-31 | |

T = Type ;
T = 1 pour une commande ou une réponse à une commande
L = longueur du champ "paramètres" : 2 octets si L = 0 ou 3 octets si L = 1
CCMD = code de la commande ou du message

### Exemples de commandes et de messages de réponse:

### Commande "Création d'une Route":

| | En-tête | | | Paramètres | | | |
|---|---|---|---|---|---|---|---|
| Taille | 1 bit | 1 bit | 6 bits | 1 octet | 1 octet | 4 bits | 4 bits |
| Signifie ou contient | T | L | CCMD | IDsp | IDdp | Mi | PTi |
| Valeur | 1 | 1 | VAL1 | 0-255 | 0-255 | 0-15 | 0-15 |

VAL1 = valeur du code de la commande
IDsp = Identifiant du point source de la commande
IDdp = Identifiant du point de destination de la route
Mi = mode de fonctionnement de l'interface d'émission/réception de données sans contact (M1, M2 ou M3)
PTi = protocole de communication sans contact (PT1, PT2 ou PT3)

### Message "Création Route OK"

| | En-tête | | | Paramètres | | |
|---|---|---|---|---|---|---|
| Taille | 1 bit | 1 bit | 6 bits | 1 octet | 6 bits | 2 bits |
| Signifie ou contient | T | L | CCMD | IDsp | **CHANi** | RFU |
| Valeur | 1 | 0 | VAL2 | 0-255 | 0-63 | 0-3 |

VAL2 = valeur du code de la réponse
IDsp = Identifiant du point source de la commande
CHANi = Numéro de la route attribuée (Numéro de Canal)
RFU = Réservé pour utilisation future

### Message "Erreur de Création Route"

| | En-tête | | | Paramètres | |
|---|---|---|---|---|---|
| Taille | 1 bit | 1 bit | 6 bits | 1 octet | 1 octet |
| Signifie ou contient | T | L | CCMD | IDsp | IDdp |
| Valeur | 1 | 0 | VAL3 | 0-255 | 0-255 |

VAL3 = valeur du code du message
IDsp = Identifiant du point source de la commande
IDdp = Identifiant du point de destination de la route
Mi = mode de fonctionnement de l'interface d'émission/réception de données sans contact (M1, M2 ou M3)
PTi = protocole de communication sans contact (PT1, PT2 ou PT3)

### Commande "Modification de Route" ou "Suppression de Route"

| | En-tête | | | Paramètres | | | | |
|---|---|---|---|---|---|---|---|---|
| Taille | 1 bit | 1 bit | 6 bits | octet | 6 bits | 2 bits | 4 bits | 4 bits |
| Signifie au contient | T | L | CCMD | IDsp | **CHANi** | RFU | Mi | PTi |
| Valeur | 1 | 1 | VAL4 ou VAL5 | 0-255 | 0-63 | 0-3 | 0-15 | 0-15 |

VAL4 ou VAL5 = valeur du code de chaque commande
IDsp = Identifiant du point source de la commande
CHANi = Numéro de la route à modifier ou supprimer
RFU = Réservé pour utilisation future
Mi = mode de fonctionnement de l'interface émission/réception de données sans contact (M1, M2 ou M3)
PTi = protocole de communication sans contact (PT1, PT2 ou PT3)

### Messages "Modification de Route OK " ou "Suppression de Route OK"

| | En-tête | | | Paramètres | | |
|---|---|---|---|---|---|---|
| Taille | 1 bit | 1 bit | 6 bits | 1 octet | 6 bits | 2 bits |
| Signifie ou contient | T | L | CCMD | IDsp | CHANi | RFU |
| Valeur | 1 | 0 | VAL6 ou VAL7 | 0-255 | 0-63 | 0-3 |

VAL6 ou VAL 7 = valeur du code de chaque message
IDsp = Identifiant du point source de la commande
CHANi = Numéro de la route modifiée ou supprimée
RFU = Réservé pour utilisation future

### Messages "Erreur de Modification de Route" ou "Erreur de Suppression de Route"

| | En-tête | | | Paramètres | | |
|---|---|---|---|---|---|---|
| Taille | 1 bit | 1 bit | 6 bits | 1 octet | 6 bits | 2 bits |
| Signifie ou contient | T | L | CCMD | IDsp | CHANi | RFU |
| Valeur | 1 | 0 | VAL8 ou VAL9 | 0-255 | 0-63 | 0-3 |

VAL8 ou VAL 9 = valeur du code de chaque message
IDsp = Identifiant du point source de la commande
CHANi = Numéro de la route concernée
RFU = Réservé pour utilisation future

### B/ Exemples de trames de données

T = 0 pour une trame de données ou une réponse à une trame de données
L = 0 si trame de 256 octets de données
L = 1 si trame de 64 Koctets de données
DL = Longueur des données en octets
DATA = Données d'application
CHANi = numéro de canal de routage

### Trame de 255 octets de données

| | En-tête | | | | |
|---|---|---|---|---|---|
| Taille | 1 bit | 1 bit | 6 bits | 1 octet | 0 à 255 octets |
| Signifie ou contient | T | L | CHANi | DL | DATA |
| Valeur | **0** | **0** | 0-63 | 255 | |

### Trame de 64K octets de données

| | En-tête | | | | |
|---|---|---|---|---|---|
| Taille | 1 bit | 1 bit | 6 bits | 2 octets | 0 à 65535 octets |
| Signifie ou contient | T | L | CHANi | DL | DATA |
| Valeur | **0** | **1** | 0-63 | 65535 | |

### Message "Accusé de réception sans erreur"

| | | | |
|---|---|---|---|
| Taille | 1 bit | 1 bit | 6 bits |
| Signifie ou contient | T | Pas d'erreur | CHANi |
| Valeur | **0** | **0** | 0-63 |

### Message "Erreur de réception"

| | | | | |
|---|---|---|---|---|
| Taille | 1 bit | 1 bit | 6 bits | 1 octet |
| Signifie ou contient | T | Erreur | **CHANi** | Code de l'erreur |
| Valeur | 0 | 1 | 0-63 | 0-255 |

### Annexe 2 faisant partie intégrante de la description - Exemples de tables de routage

**Tableau 1 : Exempte de table de routage dynamique avec des points sources localisés dans HP1 ou HP2**

| | | | | **IDdp** | | |
|---|---|---|---|---|---|---|
| **CHANi** | **IDsp** | **PTi** | **Mi** | **Envoyer** | **Notifier** | **Commentaires** |
| 1 | ID(P1) | PI1 | M1 | ID(P3) | ID(P2) | Processeur hôte HP1 vers interface CLINT en mode lecteur ISOA |
| 2 | ID(P1) | PT2 | M1 | ID (P3) | - | Processeur hôte HP1 vers interface CLINT en mode lecteur ISOB |
| 3 | ID(P1) | PT3 | M1 | ID (P3) | - | Processeur hôte HP1 vers interface CLINT en mode lecteur ISOB |
| 4 | ID(P1) | PT1 | M3 | ID(P3) | ID(P2) | Processeur hôte HP1 vers interface CLINT en mode "device" ISOA |
| 5 | ID(P1) | PT2 | M3 | ID(P3) | - | Processeur hôte HP1 vers interface CLINT en mode "device" ISOB |
| 6 | ID(P1) | M3 | M3 | ID(P3) | - | Processeur hôte HP1 vers interface CLINT en mode "device" ISOB |
| 7 | ID(P1) | - | - | ID(P2) | | Processeur hôte HP1 vers carte SIM (HP2) |
| 8 | ID(P2) | - | - | ID(P1) | - | Carte SIM (HP2) vers processeur hôte |
| 9 | ID(P2) | PT1 | M1 | ID(P3) | - | Carte SIM (HP2) vers interface CLINT en mode lecteur ISOA |
| 10 | ID(P2) | PT2 | M1 | ID(P3) | ID(P2) | Carte SIM (HP2) vers interface CLINT en mode lecteur ISOB |
| 11 | ID(P2) | PT3 | M1 | ID(P3) | ID(P2) | Carte SIM (HP2) vers interface CLINT en mode lecteur ISO15 |
| 12 | ID(P2) | PT1 | M3 | ID(P3) | - | Carte SIM (HP2) vers interface CLINT en mode "device" ISOA |
| 13 | ID(P2) | PT2 | M3 | ID(P3) | ID(P2) | Carte SIM (HP2) vers interface CLINT en mode "device" ISOB |
| 14 | ID(P2) | PT3 | M3 | ID(P3) | ID(P2) | Carte SIM (HP2) vers interface CLINT en mode "device" ISO15 |

**Tableau 2 : Exemple de table de routage préenregistrée avec des points sources localisés dans HP1 ou HP2**

| | | | | **IDdp** | | | |
|---|---|---|---|---|---|---|---|
| **CHANi** | **IDsp** | **PTi** | **Mi** | **Envoyer** | **Notifier** | **Occupée** | **Commentaires** |
| 1 | ID (P1) | PT1 | M1 | ID (P3) | ID (P2) | 1 | Processeur hôte HP1 vers interface CLINT en mode lecteur ISOA |
| 2 | ID(P1) | PT2 | M1 | ID (P3) | - | 0 | Processeur hôte HP1 vers interface CLINT en mode lecteur ISOB |
| 3 | ID(P1) | PT3 | M1 | ID (P3) | - | 0 | Processeur hôte HP1 vers interface CLINT en mode lecteur ISO15 |
| 4 | ID(P1) | PT1 | M3 | ID(P3) | ID(P2) | 0 | Processeur hôte HP1 vers interface CLINT en mode "device" ISOA |
| 5 | ID(P1) | PT2 | M3 | ID(P3) | - | 0 | Processeur hôte HP1 vers interface CLINT en mode "device" ISOB |
| 6 | ID(P1) | PT3 | M3 | ID (P3) | - | 0 | Processeur hôte HP1 vers interface CLINT en mode "device" ISO15 |
| 7 | ID(P1) | - | - | ID (P2) | | 1 | Processeur hôte HP1 vers carte SIM (HP2) |
| 8 | ID (P2) | - | - | ID(P1) | - | 0 | Carte SIM (HP2) vers processeur hôte HP1 |
| 9 | ID(P2) | PT1 | M1 | ID(P3) | - | 0 | Carte SIM (HP2) vers interface CLINT en mode lecteur ISOA |
| 10 | ID (P2) | PT2 | M1 | ID (P3) | ID(P2) | 0 | Carte SIM (HP2) vers interface CLINT en mode lecteur ISOB |
| 11 | ID(P2) | PT3 | M1 | ID(P3) | ID(P2) | 0 | Carte SIM (HP2) vers interface CLINT en mode lecteur ISO15 |
| 12 | ID(P2) | PT1 | M3 | ID(P3) | - | 1 | Carte SIM (HP2) vers interface CLINT en mode "device" ISOA |
| 13 | ID(P2) | PT2 | M3 | ID(P3) | ID(P2) | 0 | Carte SIM (HP2) vers interface CLINT en mode "device" ISOB |
| 14 | ID(P2) | PT3 | M3 | ID(P3) | ID (P2) | 0 | Carte SIM (HP2) vers interface CLINT en mode "device" ISO15 |

**Tableau 3 : Exemple de table de routage dynamique avec un point source localisé dans l'interface CLINT et sans mettre en oeuvre le second aspect de l'invention (toutes les données sont envoyées aux deux processeurs hôtes HP1, HP2)**

| **CHANi** | **IDsp** | **PTi** | **Mi** | **IDdp** | | **Commentaires** |
|---|---|---|---|---|---|---|
| 40 | ID(P3) | PI1 | M1 | ID(P1) | ID (P2) | Interface CLINT en mode lecteur ISO A vers processeurs hôtes HP1, HP2 |
| 41 | ID(P3) | PI2 | M1 | ID(P1) | ID (P2) | Interface CLINT en mode lecteur ISO B vers processeurs hôtes HP1, HP2 |
| 42 | ID(P3) | PT3 | M1 | ID(P1) | ID(P2) | Interface CLINT en mode lecteur ISO 15693 vers processeurs hôtes HP1, HP2 |
| 43 | ID(P3) | PT1 | M2 | ID(P2) | ID(P2) | Interface CLINT en mode émulation ISO A vers processeurs hôtes HP1, HP2 |
| 44 | ID(P3) | PT2 | M2 | ID(P1) | ID(P2) | Interface CLINT en mode émulation ISO B vers processeurs hôtes HP1, HP2 |
| 45 | ID(P3) | PT3 | M2 | ID(P1) | ID(P2) | Interface CLINT en mode émulation ISO 15693 vers processeurs hôtes HP1, HP2 |
| 46 | ID(P3) | PT1 | M3 | ID(P1) | ID(P2) | Interface CLINT en mode "device" ISO A vers processeurs hôtes HP1, HP2 |
| 47 | ID(P3) | PI2 | M3 | ID(P1) | ID(P2) | Interface CLINT en mode "device" ISO B vers processeurs hôtes HP1, HP2 |
| 48 | ID(P3) | PT3 | M3 | ID(P1) | ID(P2) | Interface CLINT en mode "device" ISO 15693 vers processeurs hôtes HP1, HP2 |

**Tableau 4 : Exemple de table de routage préenregistrée ayant un point source localisé dans l'interface CLINT (second aspect de l'invention)**

| | | | | **Ddp** | | | |
|---|---|---|---|---|---|---|---|
| **CHANi** | **IDsp** | **PTi** | **Mi** | **Envoyer** | **Notifier** | **Utilisé** | **Commentaires** |
| 40 | ID(P3) | PT1 | M1 | ID(P1) | ID(P2) | | Interface CLINT en mode lecteur ISO A vers processeur hôte HP1 |
| 41 | ID(P3) | PT2 | M1 | ID(P1) | ID(P2) | | Interface CLINT en mode lecteur ISO B vers processeur hôte HP1 |
| 42 | ID(P3) | PT3 | M1 | ID(P2) | (HP2) | | Interface CLINT en mode lecteur ISO 15693 vers carte SIM |
| 43 | ID(P3) | PT1 | M2 | ID(p2) | | | Interface CLINT en mode émulation carte ISO A vers carte SIM (HP2) |
| 44 | ID(P3) | PT2 | M2 | ID(P1) | - | | Interface CLINT en mode émulation carte ISO B vers processeur hôte HP1 |
| 45 | ID(P3) | PT3 | M2 | - | ID(P2) | | Interface CLINT en mode émulation carte ISO 15693 vers carte SIM (HP2) (notification uniquement) |
| 46 | ID(P3) | PT1 | M3 | ID(P1) | ID(P2) | | Mode "device" ISO A ; appariement géré par le processeur hôte |
| 47 | ID(P3) | PT2 | M3 | - | - | | Aucune action (configuration interdite) |
| 48 | ID(P3) | PT3 | M3 | ID(P1) | ID(P2) | | Mode "device" ISO 15693 ; appariement géré par le processeur hôte |

## Revendications

1. Procédé de routage de données dans un jeu de puces comprenant au moins un processeur hôte (HP1, HP2), un contrôleur (NFCC) et une interface d'émission/réception de données sans contact (CLINT) de type RFID,
**caractérisé en ce qu'**il comprend les étapes consistant à :
- envoyer au contrôleur (NFCC), au moyen d'un point source (P1, P2) localisé dans le processeur hôte, une commande (CMD) d'ouverture de chemin de données désignant un point de destination (P3) localisé dans l'interface d'émission/réception de données sans contact (CLINT),
- en réponse à la commande (CMD) d'ouverture de chemin de données, ouvrir, au moyen du contrôleur (NFCC), un chemin de données reliant le point source au point de destination, en attribuant au chemin de données un numéro de canal de routage (CHANi) et en enregistrant dans une table de routage (RT) le numéro de canal de routage et des paramètres de routage comprenant au moins un identifiant (IDsp) du point source et un identifiant (IDdp) du point de destination,
- envoyer au contrôleur (NFCC), au moyen du point source, des données destinées au point de destination encapsulées dans une trame (DF) ayant un champ d'en-tête comprenant le numéro de canal de routage, et
- sur réception des données encapsulées dans une trame (DF) ayant un champ d'en-tête comprenant le numéro de canal de routage, rechercher, au moyen du contrôleur (NFCC), un point de destination des données dans la table de routage en utilisant le numéro de canal de routage en tant qu'index de sélection du point de destination, puis envoyer les données au point de destination.

2. Procédé selon la revendication 1, mis en oeuvre dans un jeu de puces dans lequel l'interface d'émission/réception de données sans contact est configurable selon plusieurs modes de fonctionnement (Mi, M1, M2, M3) et selon plusieurs protocoles de communication sans contact (PTi, PT1, PT2, PT3), et comprenant, en réponse à une commande (CMD) d'ouverture de chemin de données émise par un point source (P1, P2) localisé dans le processeur hôte et désignant un point de destination (P3) localisé dans l'interface d'émission/réception de données sans contact (CLINT), les étapes suivantes réalisées au moyen du contrôleur (NFCC) :
- ouvrir un chemin de données entre le point source et le point de destination en attribuant au chemin de données un numéro de canal de routage (CHANi) et en enregistrant dans la table de routage le numéro de canal de routage et des paramètres de routage comprenant un paramètre de mode de fonctionnement (Mi) de l'interface d'émission/réception de données sans contact et un paramètre de protocole de communication sans contact (PTi), et
- configurer l'interface d'émission/réception de données sans contact pour qu'elle émette des données dans un canal de transmission de données sans contact en utilisant les paramètres de mode de fonctionnement (Mi) et de protocole de communication sans contact (PTi) figurant dans la table de routage pour le chemin de données par l'intermédiaire duquel les données à émettre ont été reçues.

3. Procédé selon l'une des revendications 1 et 2, mis en oeuvre dans un jeu de puces comprenant au moins deux processeurs hôtes (HP1, HP2), dans lequel le contrôleur (NFCC) utilise également la table de routage pour ouvrir un chemin de données entre les deux processeurs hôtes (HP1, HP2).

4. Procédé selon l'une des revendications 1 à 3, comprenant l'envoi au contrôleur (NFCC), au moyen d'un point source (P1, P2) localisé dans le processeur hôte, de commandes de création de chemins de données comprenant des paramètres de routage et des paramètres de configuration de l'interface d'émission/réception de données sans contact à enregistrer dans la table de routage.

5. Procédé selon l'une des revendications 1 à 4, dans lequel la table de routage est remplie ou vidée de façon dynamique par le contrôleur (NFCC) lorsque des chemins de données ayant un point source localisé dans un processeur hôte (HP1, HP2) sont créés ou fermés.

6. Procédé selon l'une des revendications 1 à 4, comprenant l'utilisation par le contrôleur (NFCC) d'une table de routage comprenant des chemins de données préenregistrés ayant un point source localisé dans un processeur hôte (HP1, HP2).

7. Procédé selon l'une des revendications 1 à 6, mis en oeuvre dans un jeu de puces comprenant au moins deux processeurs hôtes (HP1, HP2), et dans lequel, lorsque des données sont reçues par l'interface d'émission/réception de données sans contact via un canal de transmission de données sans contact, le contrôleur (NFCC) identifie au moins un processeur hôte destinataire des données en utilisant au moins comme critères de détermination le mode de fonctionnement (Mi) et le protocole de communication sans contact (PTi) utilisés par l'interface d'émission/réception de données sans contact pour créer le canal de transmission de données sans contact par l'intermédiaire duquel les données sont reçues.

8. Procédé selon la revendication 7, comprenant les étapes suivantes :
- utilisation par le contrôleur (NFCC) d'une table de routage contenant des chemins de données préenregistrés ayant un point source localisé dans l'interface d'émission/réception de données sans contact (CLINT), et pour chacun de ces chemins de données, au moins un identifiant d'un point de destination (IDdp), un paramètre de mode de fonctionnement (Mi) de l'interface d'émission/réception de données sans contact et un paramètre de protocole de communication sans contact (PTi), et
- lorsque des données sont reçues par l'interface d'émission/réception de données sans contact via un canal de transmission de données sans contact, détermination par le contrôleur (NFCC) d'au moins un point de destination des données, en recherchant dans la table de routage un chemin de données ayant un paramètre de mode de fonctionnement (Mi) et un paramètre de protocole de communication sans contact (PTi) correspondant aux paramètres de mode de fonctionnement et de protocole de communication sans contact utilisés par l'interface d'émission/réception de données sans contact pour créer le canal de transmission de données sans contact par l'intermédiaire duquel les données sont reçues.

9. Procédé selon l'une des revendications 1 à 8, dans lequel des points sources ou des points de destination enregistrés dans la table de routage sont des services prenant la forme de programmes exécutés par un processeur hôte et auxquels le contrôleur (NFCC) attribue des chemins de données.

10. Procédé selon l'une des revendications 1 à 9, dans lequel les paramètres de routage mémorisés dans la table de routage comprennent également un identifiant d'un point de notification (IDdp) devant recevoir copie des données envoyées au point de destination.

11. Procédé selon l'une des revendications 1 à 10, mis en oeuvre dans un jeu de puces dans lequel un processeur hôte est un circuit sécurisé tel un circuit intégré de carte SIM.

12. Dispositif d'émission/réception de données (NFCR2) comprenant une interface d'émission/réception de données sans contact (CLINT) de type RFID, un contrôleur (NFCC) et au moins un port d'entrée/sortie (INT1, INT2) pour relier l'interface d'émission/réception de données sans contact (CLINT) à un processeur hôte (HP1, HP2),
**caractérisé en ce que** le contrôleur (NFCC) est configuré pour :
- en réponse à une commande (CMD) d'ouverture de chemin de données émise par un point source localisé dans un processeur hôte (HP1, HP2) et désignant un point de destination (P3) localisé dans l'interface d'émission/réception de données sans contact (CLINT), ouvrir un chemin de données entre le point source et un point de destination en attribuant au chemin de données un numéro de canal de routage (CHANi) et en enregistrant dans une table de routage (RT) le numéro de canal de routage et des paramètres de routage comprenant au moins un identifiant (IDsp) du point source et un identifiant (IDdp) du point de destination, et
- sur réception de données encapsulées dans une trame (DF) ayant un champ d'en-tête comprenant le numéro de canal de routage, rechercher un point de destination des données dans la table de routage en utilisant le numéro de canal de routage en tant qu'index de sélection du point de destination.

13. Dispositif selon la revendication 12, dans lequel :
- l'interface d'émission/réception de données sans contact est configurable selon plusieurs modes de fonctionnement (Mi, M1 M2, M3) et selon plusieurs protocoles de communication sans contact (PTi, PT1, PT2, PT3),
- le contrôleur (NFCC) est configuré pour, en réponse à une commande (CMD) d'ouverture de chemin de données émise par un point source (P1, P2) localisé dans le processeur hôte et désignant un point de destination (P3) localisé dans l'interface d'émission/réception de données sans contact (CLINT), ouvrir un chemin de données entre le point source et le point de destination en attribuant au chemin de données un numéro de canal de routage (CHANi) et en enregistrant dans la table de routage le numéro de canal de routage et des paramètres de routage comprenant un paramètre de mode de fonctionnement (Mi) de l'interface d'émission/réception de données sans contact et un paramètre de protocole de communication sans contact (PTi), et
- l'interface d'émission/réception de données sans contact est configurée pour émettre des données dans un canal de transmission de données sans contact en utilisant les paramètres de mode de fonctionnement (Mi) et de protocole de communication sans contact (PTi) figurant dans la table de routage pour le chemin de données par l'intermédiaire duquel les données à émettre ont été reçues.

14. Dispositif selon l'une des revendications 12 et 13, comprenant au moins deux ports d'entrée/sortie (INT1, INT2) et dans lequel le contrôleur utilise également la table de routage pour ouvrir un chemin de données entre deux processeurs hôtes (HP1, HP2).

15. Dispositif selon l'une des revendications 12 à 14, dans lequel le contrôleur (NFCC) est configuré pour décoder des commandes de création de chemins de données comprenant des paramètres de routage et des paramètres de configuration de l'interface d'émission/réception de données sans contact, et pour enregistrer dans la table de routage les paramètres de routage et de configuration présents dans les commandes.

16. Dispositif selon l'une des revendications 12 à 15, dans lequel le contrôleur (NFCC) est configuré pour remplir ou vider de façon dynamique la table de routage lorsque des chemins de données ayant un point source localisé dans un processeur hôte (HP1, HP2) sont créés ou fermés.

17. Dispositif selon l'une des revendications 12 à 15, dans lequel le processeur hôte est configuré pour préenregistrer dans la table de routage des chemins de données ayant un point source localisé dans un processeur hôte (HP1, HP2).

18. Dispositif selon l'une des revendications 12 à 17, dans lequel le contrôleur ou l'interface d'émission/réception de données sans contact est configuré pour, lorsque des données sont reçues par l'interface d'émission/réception de données sans contact via un canal de transmission de données sans contact, déterminer un point de destination des données en utilisant comme critères de détermination le mode de fonctionnement (Mi) et le protocole de communication sans contact (PTi) utilisés par l'interface d'émission/réception de données sans contact pour créer le canal de transmission de données sans contact par l'intermédiaire duquel les données sont reçues.

19. Dispositif selon l'une des revendications 12 à 18, dans lequel le contrôleur (NFCC) est configuré pour :
- préenregistrer dans la table de routage des chemins de données ayant un point source localisé dans l'interface d'émission/réception de données sans contact (CLINT), et pour chacun de ces chemins de données, au moins un identifiant d'un point de destination (IDdp), un paramètre de mode de fonctionnement (Mi) de l'interface d'émission/réception de données sans contact et un paramètre de protocole de communication sans contact (PTi), et
- lorsque des données sont reçues par l'interface d'émission/réception de données sans contact via un canal de transmission de données sans contact, déterminer au moins un point de destination des données en recherchant dans la table de routage un chemin de données ayant un paramètre de mode de fonctionnement (Mi) et un paramètre de protocole de communication sans contact (PTi) correspondant aux paramètres de mode de fonctionnement et de protocole de communication sans contact utilisés par l'interface d'émission/réception de données sans contact pour créer le canal de transmission de données sans contact par l'intermédiaire duquel les données sont reçues.

20. Dispositif selon l'une des revendications 12 à 19, dans lequel des points sources ou des points de destination enregistrés dans la table de routage sont des services prenant la forme de programmes exécutés par un processeur hôte et auxquels le contrôleur (NFCC) attribue des chemins de données.

21. Dispositif selon l'une des revendications 12 à 20, dans lequel les paramètres de routage mémorisés dans la table de routage comprennent également un identifiant d'un point de notification (IDdp) devant recevoir copie des données envoyées au point de destination.

22. Dispositif selon l'une des revendications 12 à 21, relié à un processeur hôte formé par un circuit sécurisé tel un circuit intégré de carte SIM.

## Claims

1. A method for routing data in a chipset comprising at least one host processor (HP1, HP2), a controller (NFCC), and an RFID-type contactless data send/receive interface (CLINT),
**characterized in that** it comprises the steps of:
- sending to the controller (NFCC), by means of a source point (P1, P2) located in the host processor, a command (CMD) for opening a data path designating a destination point (P3) located in the contactless data send/receive interface (CLINT),
- in response to the command (CMD) for opening a data path, opening, by means of the controller (NFCC), a data path linking the source point to the destination point, by allocating to the data path a routing channel number (CHANi) and by saving in a routing table (RT) the routing channel number and routing parameters comprising at least one identifier (IDsp) of the source point and one identifier (IDdp) of the destination point,
- sending to the controller (NFCC), by means of the source point, data destined for the destination point encapsulated in a frame (DF) having a small header field comprising the routing channel number, and
- upon receiving the data encapsulated in a frame (DF) having a header field comprising the routing channel number, searching, by means of the controller (NFCC) for a destination point of the data in the routing table by using the routing channel number as index to select the destination point, then sending the data to the destination point.

2. Method according to claim 1, implemented in a chipset, wherein the contactless data send/receive interface is configurable according to several operating modes (Mi, M1, M2, M3) and according to several contactless communication protocols (PTi, PT1, PT2, PT3), and comprising, in response to a command (CMD) for opening a data path sent by a source point (P1, P2) located in the host processor and designating a destination point (P3) located in the contactless data send/receive interface (CLINT), the following steps are performed by means of the controller (NFCC):
- opening of a data path between the source point and the destination point by allocating to the data path a routing channel number (CHANi) and by saving in the routing table the routing channel number and routing parameters comprising an operating mode parameter (Mi) of the contactless data send/receive interface and a contactless communication protocol parameter (PTi), and
- configuring the contactless data send/receive interface so that it sends data in a contactless data transmission channel by using the operating mode (Mi) and contactless communication protocol (PTi) parameters contained in the routing table for the data path through which the data to be sent have been received.

3. Method according to one of claims 1 and 2, implemented in a chipset comprising at least two host processors (HP1, HP2), wherein the controller also uses the routing table to open a data path between the two host processors (HP1, HP2).

4. Method according to one of claims 1 to 3, comprising sending to the controller (NFCC), by means of a source point (P1, P2) located in the host processor, commands for creating data paths comprising routing parameters and configuration parameters for configuring the contactless data send/receive interface to be saved in the routing table.

5. Method according to one of claims 1 to 4, wherein the controller dynamically fills or empties the routing table when data paths having a source point located in a host processor (HP1, HP2) are created or closed.

6. Method according to one of claims 1 to 4, comprising the use by the controller (NFCC) of a routing table comprising pre-saved data paths having a source point located in a host processor (HP1, HP2).

7. Method according to one of claims 1 to 6, implemented in a chipset comprising at least two host processors (HP1, HP2), and wherein, when data are received by the contactless data send/receive interface via a contactless data transmission channel, the controller identifies at least one recipient host processor of the data using at least as determination criteria the operating mode (Mi) and the contactless communication protocol (PTi) used by the contactless data send/receive interface to create the contactless data transmission channel through which the data are received.

8. Method according to claim 7, comprising the following steps:
- the use by the controller (NFCC) of a routing table containing pre-saved data paths having a source point located in the contactless data send/receive interface (CLINT), and for each of these data paths, at least one identifier of a destination point (IDdp), an operating mode parameter (Mi) of the contactless data send/receive interface, and a contactless communication protocol parameter (PTi), and
- when data are received by the contactless data send/receive interface via a contactless data transmission channel, the controller (NFCC) determines at least one destination point of the data by searching in the routing table for a data path having an operating mode parameter (Mi) and a contactless communication protocol parameter (PTi) corresponding to the operating mode and contactless communication protocol parameters used by the contactless data send/receive interface to create the contactless data transmission channel through which the data are received.

9. Method according to one of claims 1 to 8, wherein source points or destination points saved in the routing table are services taking the form of programs executed by a host processor and to which the controller (NFCC) allocates data paths.

10. Method according to one of claims 1 to 9, wherein the routing parameters stored in the routing table also comprise an identifier of a point of notification (IDdp) which must receive a copy of the data sent to the destination point.

11. Method according to one of claims 1 to 10, implemented in a chipset in which a host processor is a secure circuit such as a SIM card integrated circuit.

12. A device for sending/receiving data (NFCR2) comprising an RFID-type contactless data send/receive interface (CLINT), a controller (NFCC) and at least one input/output port (INT1, INT2) to link the contactless data send/receive interface (CLINT) to a host processor (HP1, HP2),
**characterized in that** the controller (NFCC) is configured for:
- in response to a command (CMD) for opening a data path sent by a source point located in a host processor (HP1, HP2), and designating a destination point (P3) located in the contactless data send/receive interface (CLINT), opening a data path between the source point and a destination point by allocating to the data path a routing channel number (CHANi) and by saving in a routing table (RT) the routing channel number and routing parameters comprising at least one identifier (IDsp) of the source point and one identifier (IDdp) of the destination point, and
- upon receiving data encapsulated in a frame (DF) having a header field comprising the routing channel number, searching for a destination point of the data in the routing table using the routing channel number as index to select the destination point.

13. Device according to claim 12, wherein:
the contactless data send/receive interface is configurable according to several operating modes (Mi, M1, M2, M3) and according to several contactless communication protocols (PTi, PT1, PT2, PT3),
- the controller (NFCC) is configured for, in response to a command (CMD) for opening a data path sent by a source point (P1, P2) located in the host processor, and designating a destination point (P3) located in the contactless data send/receive interface (CLINT), opening a data path between the source point and the destination point by allocating to the data path a routing channel number (CHANi) and by saving in the routing table the routing channel number and routing parameters comprising an operating mode parameter (Mi) of the contactless data send/receive interface and a contactless communication protocol parameter (PTi), and
- the contactless data send/receive interface is configured for sending data in a contactless data transmission channel by using the operating mode (Mi) and contactless communication protocol parameters (PTi) contained in the routing table for the data path through which the data to be sent have been received.

14. Device according to one of claims 12 and 13, comprising at least two input/output ports (INT1, INT2) and wherein the controller also uses the routing table to open a data path between two host processors (HP1, HP2).

15. Device according to one of claims 12 to 14, wherein the controller (NFCC) is configured for decoding commands for creating data paths comprising routing parameters and configuration parameters for configuring the contactless data send/receive interface, and for saving in the routing table the routing and configuration parameters present in the commands.

16. Device according to one of claims 12 to 15, wherein the controller (NFCC) is configured for dynamically filling or emptying the routing table when data paths having a source point located in a host processor (HP1, HP2) are created or closed.

17. Device according to one of claims 12 to 15, wherein the host processor is configured for pre-saving in the routing table data paths having a source point located in a host processor (HP1, HP2).

18. Device according to one of claims 12 to 17, wherein the controller or the contactless data send/receive interface is configured for, when data are received by the contactless data send/receive interface via a contactless data transmission channel, determining a destination point of the data by using as determination criteria the operating mode (Mi) and the contactless communication protocol (PTi) used by the contactless data send/receive interface to create the contactless data transmission channel through which the data are received.

19. Device according to one of claims 12 to 18, wherein the controller (NFCC) is configured for:
- pre-saving in the routing table data paths having a source point located in the contactless data send/receive interface (CLINT), and for each of these data paths, at least one identifier of a destination point (IDdp), one operating mode parameter (Mi) of the contactless data send/receive interface and one contactless communication protocol parameter (PTi), and
- when data are received by the contactless data send/receive interface via a contactless data transmission channel, determining at least one destination point of the data by searching in the routing table for a data path having an operating mode parameter (Mi) and a contactless communication protocol parameter (PTi) corresponding to the operating mode and contactless communication protocol parameters used by the contactless data send/receive interface to create the contactless data transmission channel through which the data are received.

20. Device according to one of claims 12 to 19, wherein source points or destination points saved in the routing table are services taking the form of programs executed by a host processor and to which the controller (NFCC) allocates data paths.

21. Device according to one of claims 12 to 20, wherein the routing parameters stored in the routing table further comprise an identifier of a point of notification (IDdp) which must receive a copy of the data sent to the destination point.

22. Device according to one of claims 12 to 21, linked to a host processor formed by a secure circuit such as a SIM card integrated circuit.

## Patentansprüche

1. Datenrouting-Verfahren in einem Chipsatz, umfassend wenigstens einen Hostprozessor (HP1, HP2), eine Steuereinheit (NFCC) und eine kontaktlose Datensende-/Empfangsschnittstelle (CLINT) vom RFID-Typ,
**dadurch gekennzeichnet, dass** es die folgenden Schritte umfasst, die darin bestehen:
- einen Datenwegeröffnungsbefehl (CMD), der einen in der kontaktlosen Datensende-/Empfangsschnittstelle (CLINT) lokalisierten Bestimmungspunkt (P3) benennt, mittels eines im Hostprozessor lokalisierten Ausgangspunktes (P1, P2) an die Steuereinheit (NFCC) zu senden,
- als Antwort auf den Datenwegeröffnungsbefehl (CMD), mittels der Steuereinheit (NFCC) einen Datenweg zu eröffnen, der den Ausgangspunkt mit dem Bestimmungspunkt verbindet, wobei dem Datenweg eine Routingkanalnummer (CHANi) zugewiesen wird und wobei die Routingkanalnummer sowie wenigstens einen Identifizierer (IDsp) des Ausgangspunktes und einen Identifizierer (IDdp) des Bestimmungspunktes umfassende Routingparameter in eine Routing-Tabelle (RT) eingetragen werden,
- für den Bestimmungspunkt bestimmte, in einem Datenübertragungsblock (DF), der ein die Routingkanalnummer umfassendes Header-Feld aufweist, verkapselte Daten mittels des Ausgangspunktes an die Steuereinheit (NFCC) zu senden und
- beim Empfang der in einem Datenübertragungsblock (DF), der ein die Routingkanalnummer umfassendes Header-Feld aufweist, verkapselten Daten, mittels der Steuereinheit (NFCC), unter Verwendung der Routingkanalnummer als Index für die Auswahl des Bestimmungspunktes, einen Bestimmungspunkt der Daten in der Routing-Tabelle zu suchen und die Daten dann an den Bestimmungspunkt zu senden.

2. In einem Chipsatz implementiertes Verfahren nach Anspruch 1, in dem die kontaktlose Datensende-/Empfangsschnittstelle in Bezug auf mehrere Betriebsmodi (Mi, M1, M2, M3) und mehrere kontaktlose Kommunikationsprotokolle (PTi, PT1, PT2, PT3) konfigurierbar ist und das als Antwort auf einen von einem im Hostprozessor lokalisierten Ausgangspunkt (P1, P2) ausgesandten Datenwegeröffnungsbefehl (CMD), der einen in der kontaktlosen Datensende-/Empfangsschnittstelle (CLINT) lokalisierten Bestimmungspunkt (P3) benennt, die folgenden mittels der Steuereinheit (NFCC) ausgeführten Schritte umfasst:
- Eröffnung eines Datenwegs zwischen dem Ausgangspunkt und dem Bestimmungspunkt, wobei dem Datenweg eine Routingkanalnummer (CHAni) zugewiesen wird und wobei die Routingkanalnummer sowie Routingparameter, die einen Betriebsmodusparameter (Mi) der kontaktlosen Datensende-/Empfangsschnittstelle und einen kontaktlosen Kommunikationsprotokollparameter (PTi) umfassen, in die Routing-Tabelle eingetragen werden, und
- Konfiguration der kontaktlosen Datensende-/Empfangsschnittstelle, so dass sie unter Verwendung der für den Datenweg, über den die zu sendenden Daten empfangen wurden, in der Routing-Tabelle enthaltenen Betriebsmodus- (Mi) und kontaktlosen Kommunikationsprotokollparameter (PTi), Daten in einem kontaktlosen Datenübertragungskanal sendet.

3. In einem Chipsatz implementiertes Verfahren nach einem der Ansprüche 1 oder 2, umfassend wenigstens zwei Hostprozessoren (HP1, HP2), bei dem die Steuereinheit (NFCC) die Routing-Tabelle auch verwendet, um einen Datenweg zwischen den beiden Hostprozessoren (HP1, HP2) zu eröffnen.

4. Verfahren nach einem der Ansprüche 1 bis 3, umfassend das Senden von Datenwegerzeugungsbefehlen, die in die Routing-Tabelle einzutragende Routingparameter und Konfigurationsparameter der kontaktlosen Datensende-/Empfangsschnittstelle umfassen, mittels eines im Hostprozessor lokalisierten Ausgangspunktes (P1, P2) an die Steuereinheit (NFCC).

5. Verfahren nach einem der Ansprüche 1 bis 4, bei dem die Routing-Tabelle von der Steuereinheit (NFCC) dynamisch gefüllt oder geleert wird, wenn Datenwege erzeugt oder geschlossen werden, die einen in einem Hostprozessor (HP1, HP2) lokalisierten Ausgangspunkt aufweisen.

6. Verfahren nach einem der Ansprüche 1 bis 4, umfassend die Verwendung seitens der Steuereinheit (NFCC) einer Routing-Tabelle, die einen in einem Hostprozessor (HP1, HP2) lokalisierten Ausgangspunkt aufweisende voreingetragene Datenwege umfasst.

7. In einem Chipsatz implementiertes Verfahren nach einem der Ansprüche 1 bis 6, umfassend wenigstens zwei Hostprozessoren (HP1, HP2), und bei dem die Steuereinheit (NFCC), wenn Daten von der kontaktlosen Datensende-/Empfangsschnittstelle über einen kontaktlosen Datenübertragungskanal empfangen werden, unter Verwendung wenigstens des von der kontaktlosen Datensende-/Empfangsschnittstelle zur Erzeugung des kontaktlosen Datenübertragungskanals, über den die Daten empfangen werden, verwendeten Betriebsmodus (Mi) und des von ihr verwendeten kontaktlosen Kommunikationsprotokolls (PTi) als Festlegungskriterien, wenigstens einen Hostprozessor identifiziert, an den die Daten bestimmt sind.

8. Verfahren nach Anspruch 7, umfassend die folgenden Schritte:
- Verwendung seitens der Steuereinheit (NFCC) einer Routing-Tabelle umfassend voreingetragene Datenwege, die einen in der kontaktlosen Datensende-/Empfangsschnittstelle (CLINT) lokalisierten Ausgangspunkt aufweisen sowie für jeden dieser Datenwege wenigstens einen Identifizierer eines Bestimmungspunktes (IDdp), einen Betriebsmodusparameter (Mi) der kontaktlosen Datensende-/Empfangsschnittstelle und einen kontaktlosen Kommunikationsprotokollparameter (PTi), und
- Festlegung seitens der Steuereinheit (NFCC), wenn Daten von der kontaktlosen Datensende-/Empfangsschnittstelle über einen kontaktlosen Datenübertragungskanal empfangen werden, wenigstens eines Bestimmungspunktes der Daten indem in der Routing-Tabelle ein Datenweg gesucht wird, der einen Betriebsmodusparameter (Mi) und einen kontaktlosen Kommunikationsprotokollparameter (PTi) aufweist, die den von der kontaktlosen Datensende-/Empfangsschnittstelle zur Erzeugung des kontaktlosen Datenübertragungskanals, über den die Daten empfangen werden, verwendeten Betriebsmodus- und kontaktlosen Kommunikationsprotokollparametern entsprechen.

9. Verfahren nach einem der Ansprüche 1 bis 8, bei dem in der Routing-Tabelle eingetragene Ausgangspunkte oder Bestimmungspunkte Dienste sind, die die Form von Programmen annehmen, die von einem Hostprozessor ausgeführt werden und denen die Steuereinheit (NFCC) Datenwege zuweist.

10. Verfahren nach einem der Ansprüche 1 bis 9, bei dem die in der Routing-Tabelle gespeicherten Routingparameter auch einen Identifizierer eines Benachrichtigungspunktes (IDdp) umfassen, der eine Kopie der an den Bestimmungspunkt gesandten Daten erhalten soll.

11. In einem Chipsatz implementiertes Verfahren nach einem der Ansprüche 1 bis 10, in dem ein Hostprozessor ein gesicherter Schaltkreis in der Art eines integrierten Schaltkreises einer SIM-Karte ist.

12. Datensende-/Empfangsvorrichtung (NFCR2) umfassend eine kontaktlose Datensende-/Empfangsschnittstelle (CLINT) vom RFID-Typ, eine Steuereinheit (NFCC) und wenigstens einen Eingangs/Ausgangsport (INT1, INT2), um die kontaktlose Datensende-/Empfangsschnittstelle (CLINT) mit einem Hostprozessor (HP1, HP2) zu verbinden,
**dadurch gekennzeichnet, dass** die Steuereinheit (NFCC) konfiguriert ist, um:
- als Antwort auf einen Datenwegeröffnungsbefehl (CMD), der von einem in einem Hostprozessor (HP1, HP2) lokalisierten Ausgangspunkt gesandt wurde und der einen in der kontaktlosen Datensende-/Empfangsschnittstelle (CLINT) lokalisierten Bestimmungspunkt (P3) benennt, einen Datenweg zwischen dem Ausgangspunkt und einem Bestimmungspunkt zu eröffnen, wobei dem Datenweg eine Routingkanalnummer (CHANi) zugewiesen wird und wobei die Routingkanalnummer sowie wenigstens einen Identifizierer (IDsp) des Ausgangspunktes und einen Identifizierer (IDdp) des Bestimmungspunktes umfassende Routingparameter in eine Routing-Tabelle (RT) eingetragen werden, und
- beim Empfang von in einem Datenübertragungsblock (DF), der ein die Routingkanalnummer umfassendes Header-Feld aufweist, verkapselten Daten, unter Verwendung der Routingkanalnummer als Index für die Auswahl des Bestimmungspunktes einen Bestimmungspunkt der Daten in der Routing-Tabelle zu suchen.

13. Vorrichtung nach Anspruch 12, bei dem :
- die kontaktlose Datensende-/Empfangsschnittstelle in Bezug auf mehrere Betriebsmodi (Mi, M1, M2, M3) und mehrere kontaktlose Kommunikationsprotokolle (PTi, PT1, PT2, PT3) konfigurierbar ist,
- die Steuereinheit (NFCC) konfiguriert ist, um als Antwort auf einen Datenwegeröffnungsbefehl (CMD), der von einem im Hostprozessor lokalisierten Ausgangspunkt (P1, P2) gesandt wurde und der einen in der kontaktlosen Datensende-/Empfangsschnittstelle (CLINT) lokalisierten Bestimmungspunkt (P3) benennt, einen Datenweg zwischen dem Ausgangspunkt und dem Bestimmungspunkt zu eröffnen, wobei dem Datenweg eine Routingkanalnummer (CHANi) zugewiesen wird und wobei die Routingkanalnummer sowie einen Betriebsmodusparameter (Mi) der kontaktlosen Datensende-/Empfangsschnittstelle und einen kontaktlosen Kommunikationsprotokollparameter (PTi) umfassende Routingparameter in die Routing-Tabelle eingetragen werden, und
- die kontaktlose Datensende-/Empfangsschnittstelle konfiguriert ist, um unter Verwendung der für den Datenweg, über den die zu sendenden Daten empfangen wurden, in der Routing-Tabelle enthaltenen Betriebsmodus-(Mi) und kontaktlosen Kommunikationsprotokollparameter (PTi) Daten in einem kontaktlosen Datenübertragungskanal zu senden.

14. Vorrichtung nach einem der Ansprüche 12 und 13, umfassend wenigstens zwei Eingangs-/Ausgangsports (INT1, INT2) und in der die Steuereinheit die Routing-Tabelle auch verwendet, um einen Datenweg zwischen zwei Hostprozessoren (HP1, HP2) zu eröffnen.

15. Vorrichtung nach einem der Ansprüche 12 bis 14, bei der die Steuereinheit (NFCC) konfiguriert ist, um Routingparameter und Konfigurationsparameter der kontaktlosen Datensende-/Empfangsschnittstelle umfassende Datenwegerzeugungsbefehle zu dekodieren und um die in den Befehlen enthaltenen Routing- und Konfigurationsparameter in die Routing-Tabelle einzutragen.

16. Vorrichtung nach einem der Ansprüche 12 bis 15, bei der die Steuereinheit (NFCC) konfiguriert ist, um die Routing-Tabelle dynamisch zu füllen oder zu leeren, wenn Datenwege erzeugt oder geschlossen werden, die einen in einem Hostprozessor (HP1, HP2) lokalisierten Ausgangspunkt umfassen.

17. Vorrichtung nach einem der Ansprüche 12 bis 15, bei der der Hostprozessor konfiguriert ist, um Datenwege, die einen in einem Hostprozessor (HP1, HP2) lokalisierten Ausgangspunkt aufweisen, in die Routing-Tabelle voreinzutragen.

18. Vorrichtung nach einem der Ansprüche 12 bis 17, bei der die Steuereinheit oder die kontaktlose Datensende-/Empfangsschnittstelle konfiguriert ist, um, wenn Daten von der kontaktlosen Datensende-/Empfangsschnittstelle über einen kontaktlosen Datenübertragungskanal empfangen werden, unter Verwendung des von der kontaktlosen Datensende-/Empfangsschnittstelle zur Erzeugung des kontaktlosen Datenübertragungskanals, über den die Daten empfangen werden, verwendeten Betriebsmodus (Mi) und des von ihr verwendeten kontaktlosen Kommunikationsprotokolls (PTi) als Festlegungskriterien, einen Bestimmungspunkt der Daten festzulegen.

19. Vorrichtung nach einem der Ansprüche 12 bis 18, bei der die Steuereinheit (NFCC) konfiguriert ist, um :
- Datenwege, die einen in der kontaktlosen Datensende-/Empfangsschnittstelle (CLINT) lokalisierten Ausgangspunkt aufweisen, in die Routing-Tabelle voreinzutragen sowie für jeden dieser Datenwege wenigstens einen Identifizierer eines Bestimmungspunktes (IDdp), einen Betriebsmodusparameter (Mi) der kontaktlosen Datensende-/Empfangsschnittstelle und einen kontaktlosen Kommunikationsprotokollparameter (PTi), und
- wenn Daten von der kontaktlosen Datensende-/Empfangsschnittstelle über einen kontaktlosen Datenübertragungskanal empfangen werden, wenigstens einen Bestimmungspunkt der Daten festzulegen indem in der Routing-Tabelle ein Datenweg gesucht wird, der einen Betriebsmodusparameter (Mi) und einen kontaktlosen Kommunikationsprotokollparameter (PTi) aufweist, die den von der kontaktlosen Datensende-/Empfangsschnittstelle zur Erzeugung des kontaktlosen Datenübertragungskanals, über den die Daten empfangen werden, verwendeten Betriebsmodus- und kontaktlosen Kommunikationsprotokollparametern entsprechen.

20. Vorrichtung nach einem der Ansprüche 12 bis 19, bei der in der Routing-Tabelle eingetragene Ausgangspunkte oder Bestimmungspunkte Dienste sind, die die Form von Programmen annehmen, die von einem Hostprozessor ausgeführt werden und denen die Steuereinheit (NFCC) Datenwege zuweist.

21. Vorrichtung nach einem der Ansprüche 12 bis 20, bei der die in der Routing-Tabelle gespeicherten Routingparameter auch einen Identifizierer eines Benachrichtungspunktes (IDdp) umfassen, der eine Kopie der an den Bestimmungspunkt gesandten Daten erhalten soll.

22. Vorrichtung nach einem der Ansprüche 12 bis 21, die mit einem Hostprozessor verbunden ist, der von einem gesicherten Schaltkreis in der Art eines integrierten Schaltkreises einer SIM-Karte gebildet wird.
